# EUROPEAN PATENT APPLICATION

(11) **EP 2 642 145 A1**
(43) Date of publication of application: **25.09.2013**
(21) Application number: 11840850.9
(22) Date of filing: 26.10.2011
(51) Int. Cl.: F16C 33/64, C21D 1/06, C21D 1/76, C21D 9/40, C23C 8/26, C23C 8/32, F16C 33/32, F16C 33/34, F16C 33/62

(54) **ROLLING ELEMENT BEARING, AND METHOD FOR PRODUCING ROLLING ELEMENT BEARING**

(30) Priority: 16.11.2010 JP 2010255900; 16.11.2010 JP 2010255901
(71) Applicant: NTN Corporation, Osaka-shi, Osaka 550-0003 (JP)
(72) Inventor: MIWA, Noriaki, Kuwana-shi Mie 511-0867 (JP); MATSUBARA, Yukio, Kuwana-shi Mie 511-0867 (JP)
(74) Representative: Bockhorni & Kollegen
(86) International application number: PCT/JP2011/074642
(87) International publication number: WO 2012/066913

(57) **Abstract**

A rolling bearing includes an outer ring (11) and an inner ring (12) having an annular raceway, and a plurality of balls (13) being in contact with the outer ring (11) and the inner ring (12) and arranged on the annular raceway in a rollable manner. At least one bearing member of the outer ring (11), the inner ring (12) and the balls (13) is made of JIS standard SUJ2. The bearing member has been quenched. The bearing member has a nitrided raceway surface (11 A, 12A, 13A). When a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.2 µm. The raceway surface (11A, 12A, 13A) has a Rockwell C scale hardness of not less than HRC 61.2 and not more than HRC 63.3. Thus, a rolling bearing capable of suppressing premature flaking caused by hydrogen embrittlement can be obtained.

## Description

### TECHNICAL FIELD

The present invention relates to rolling bearings and methods of manufacturing the rolling bearings.

### BACKGROUND ART

When a rolling bearing is used under a condition in which water penetration occurs, a condition in which a slip occurs, or a condition in which an electric current is passed, hydrogen produced by the decomposition of water or lubricant may enter steel of raceway members and rolling elements to cause premature flaking. Hydrogen significantly reduces the fatigue strength of steel. Accordingly, even under a condition considered to be elastohydrodynamic lubrication in which contact elements of the raceway members and the rolling elements are separated from each other by an oil film, cracks may appear in a rolling surface layer where an alternating shear stress of the contact elements reaches its maximum. The cracks may be propagated to result in premature flaking. For the purpose of size reduction and energy saving, rolling bearings will be operated under increasingly severe conditions in the future, such as a condition in which water penetration occurs, a condition in which a slip occurs, or a condition in which an electric current is passed. It is thus expected that rolling bearings highly resistant to hydrogen embrittlement will be required.

As a conventional technique of improving the hydrogen embrittlement resistance of a rolling bearing, for example, Japanese Patent Laying-Open No. 2000-282178 (Patent Document 1) discloses forming a Cr (chromium) oxide film as a passivation film to a prescribed thickness by setting a chromium content in a steel material to a prescribed value, thereby suppressing the penetration of hydrogen into the steel material.

It is also known that nitriding is effective in strengthening steel. For example, a paper titled "Estimation of Scratched Contact Fatigue Life with Artificial Dent of SUJ2 Steel Carbonitrided to Controlled Surface Nitrogen Content" (Non-Patent Document 1) discloses estimation of a dent-originating flaking life of steel having an accurately controlled nitrogen concentration.

### CITATION LIST

### PATENT DOCUMENT

PTD 1: Japanese Patent Laying-Open No. 2000-282178

### NON PATENT DOCUMENT

NPD 1: Ohki et al., "Estimation of Scratched Contact Fatigue Life with Artificial Dent of SUJ2 Steel Carbonitrided to Controlled Surface Nitrogen Content," Tetsu-to-Hagané, October 2009, Vol. 95, No. 10, pp. 695-703

### SUMMARY OF INVENTION

### TECHNICAL PROBLEM

In the above publication, a large amount of Cr is introduced to set the Cr content to the prescribed value. As a result, a carbide is coarsened and may serve as a source of stress concentration to cause premature flaking. The passivation film has the effect of delaying the diffusion of hydrogen, but also has the effect of facilitating the adsorption of produced hydrogen to the surface of steel. Therefore, for a rolling bearing used intermittently in which the hydrogen is dissipated when the bearing comes to a stop, delaying the penetration of hydrogen into the steel by the passivation film is considered effective in suppressing premature flaking. For a rolling bearing used successively, however, the passivation film adsorbs a large amount of hydrogen to increase the amount of hydrogen entering the steel, thus raising the possibility of premature flaking. It is expected that an increasing number of rolling bearings will be operated successively without human intervention in the future. Premature flaking particularly in such applications cannot be sufficiently suppressed by the conventional technique.

There is also a problem that a special steel member having a Cr content set to a prescribed value increases costs. Another problem is that a special steel member having a Cr content set to a prescribed value is not readily available overseas.

In the aforementioned paper, the hydrogen embrittlement resistance is not discussed and thus cannot be improved.

When a bearing generates heat, a shaft is thermally expanded to contribute to deterioration of working accuracy. In a machine tool main shaft rolling bearing used at high-speed rotation in a machine tool such as a machining center, it is important to reduce torque to avoid heat generation during the high-speed rotation. For this reason, the machine tool main shaft rolling bearing has a minimum amount of lubricant in order to reduce friction torque of the bearing that causes heat generation. As such, an oil film has a smaller thickness than when a sufficient amount of lubricant is supplied, thus increasing a shear stress of the lubricant due to a slip. It is thus expected that hydrogen is readily produced. An angular contact ball bearing in particular is commonly used for a machine tool main shaft rolling bearing. In the angular contact ball bearing, a slip necessarily occurs between rolling elements (balls) and raceway members (raceway rings). Furthermore, the penetration of coolant into the raceway members and the rolling elements are inevitable during actual use. When aqueous coolant is used, the penetration of the coolant means water penetration. In the machine tool main shaft rolling bearing, therefore, premature flaking readily occurs due to the penetration of hydrogen into steel.

The present invention was made in view of the aforementioned problems, and an object of the present invention is to provide a rolling bearing capable of suppressing premature flaking caused by hydrogen embrittlement.

### SOLUTION TO PROBLEM

The present inventors found that, after extensive study, by nitriding a raceway surface of at least one bearing member of raceway members and rolling elements and by optimizing a tempering temperature of the bearing member to increase plastic deformation resistance and resistance to production of atomic vacancy, the hydrogen embrittlement resistance of a rolling bearing is improved. As the at least one bearing member of the raceway members and the rolling elements, the present inventors selected high-carbon chromium bearing steel SUJ2 (JIS standard) which is most commonly used for a rolling bearing, in view of material cost and availability.

The present inventors nitrided and quenched the raceway surface of the bearing member, and then optimized the tempering temperature in order to improve the hydrogen embrittlement resistance. Nitriding the raceway surface of the bearing member increases the plastic deformation resistance of the bearing member. The present inventors found that nitriding the raceway surface of the bearing member increases the plastic deformation resistance of the bearing member, thereby improving the hydrogen embrittlement resistance of the bearing member.

The basis for the optimization of the tempering temperature is a hydrogen-enhanced strain-induced vacancy theory, which is a leading hydrogen embrittlement mechanism. Plastic deformation increases atomic vacancy. This theory is based on a finding from scientific experiments that an increase in atomic vacancy density is enhanced when hydrogen is involved. Focusing on this theory, the present inventors found that the hydrogen embrittlement resistance is improved by optimization of the tempering temperature.

One rolling bearing of the present invention includes a raceway member having an annular raceway, and a plurality of rolling elements being in contact with the raceway member and arranged on the annular raceway in a rollable manner. At least one bearing member of the raceway member and the rolling elements is made of JIS standard SUJ2. The bearing member has been quenched. The bearing member has a nitrided raceway surface. When a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.2 µm. The raceway surface has a Rockwell C scale hardness of not less than HRC 61.2 and not more than HRC 63.3.

Nitriding the raceway surface of the bearing member increases the plastic deformation resistance of the bearing member. Nitriding the raceway surface of the bearing member increases the plastic deformation resistance of the bearing member, thereby improving the hydrogen embrittlement resistance of the bearing member.

Plastic deformation increases atomic vacancy density. A dent depth shows a degree of plastic deformation resistance. In other words, it can be said that a shallower dent depth means higher plastic deformation resistance. As one measure, it can be said that the plastic deformation resistance is high when a dent depth is not more than 0.2 µm. After studying relation between the tempering temperature and the dent depth in detail, it was found that, if tempering is performed at not less than 240°C and not more than 300°C, when a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.2 µm.

It was also found that the raceway surface of the bearing member has a Rockwell C scale hardness of not less than HRC 61.2 and not more than HRC 63.3 when the tempering temperature is within a range of not less than 240°C and not more than 300°C.

Therefore, by tempering the bearing member having the nitrided raceway surface at a tempering temperature of not less than 240°C and not more than 300°C, the plastic deformation resistance and resistance to production of atomic vacancy can be increased. Thus, the hydrogen embrittlement resistance can be improved to suppress premature flaking caused by hydrogen embrittlement.

Preferably, in the aforementioned one rolling bearing, the raceway surface has a surface-nitrided concentration of not less than 0.05% by mass and not more than 0.4% by mass.

If the raceway surface has a surface-nitrided concentration of less than 0.05% by mass, a sufficient effect of extended life by the nitriding cannot be obtained. If the raceway surface has a surface-nitrided concentration of more than 0.4% by mass, a large amount of Cr carbonitrides is produced, resulting in lack of the amount of Cr contributing to hardenability. Thus, sufficient hardenability cannot be ensured. Accordingly, by setting the surface-nitrided concentration of the raceway surface to not less than 0.05% by mass and not more than 0.4% by mass, a sufficient effect of extended life by the nitriding can be obtained, to ensure sufficient hardenability.

Preferably, in the aforementioned one rolling bearing, the present inventors selected non-nitrided JIS standard SUJ2 as the rolling elements in view of productivity. As one measure, it can be said that the plastic deformation resistance is high when a dent depth is not more than 0.2 µm. After studying relation between the tempering temperature and the dent depth in detail, it was found that, if tempering is performed at not less than 240°C and not more than 280°C, when a standard rolling bearing steel ball made of SUJ2 and having a diameter of 19.05 mm is pressed against the rolling elements at a load of 1.97 kN and held for 10 seconds before the load is removed, a dent is formed in the rolling elements at a depth of not more than 0.2 µm. Therefore, by performing tempering at a tempering temperature of not less than 240°C and not more than 280°C, the plastic deformation resistance and resistance to production of atomic vacancy can be increased. Thus, the hydrogen embrittlement resistance can be improved to suppress premature flaking caused by hydrogen embrittlement.

Preferably, in the aforementioned one rolling bearing, the entire rolling elements have a Rockwell C scale hardness of not less than HRC 57.0 and not more than HRC 58.9. The entire rolling elements have a Rockwell C scale hardness of not less than HRC 57.0 and not more than HRC 58.9 when the tempering temperature is within a range of not less than 240°C and not more than 280°C.

Preferably, in the aforementioned one rolling bearing, the rolling elements are made of a material containing ceramic. According to the rolling bearing of the present invention, the rolling elements are made of a material containing ceramic that does not exhibit hydrogen embrittlement. Thus, the hydrogen embrittlement resistance can be improved to suppress premature flaking caused by hydrogen embrittlement.

Preferably, the aforementioned one rolling bearing further includes a cage for holding the rolling elements, the cage being made of a material containing metal. Under a condition in which an electric current is passed, premature flaking caused by hydrogen embrittlement is less likely to occur with a metal cage than with a resin cage. According to the rolling bearing of the present invention, therefore, premature flaking caused by hydrogen embrittlement can be suppressed.

One method of manufacturing a rolling bearing of the present invention including a raceway member having an annular raceway, and a plurality of rolling elements being in contact with the raceway member and arranged on the annular raceway in a rollable manner, includes the following steps. At least one bearing member of the raceway member and the rolling elements which is made of a material of JIS standard SUJ2 is prepared. A raceway surface of the bearing member is nitrided and quenched. The quenched bearing member is tempered at not less than 240°C and not more than 300°C.

Nitriding and quenching the raceway surface of the bearing member increases the plastic deformation resistance of the bearing member. Nitriding the raceway surface of the bearing member increases the plastic deformation resistance of the bearing member, thereby improving the hydrogen embrittlement resistance of the bearing member.

By tempering the quenched bearing member at not less than 240°C and not more than 300°C, the plastic deformation resistance of the bearing member and resistance to production of atomic vacancy in the bearing member can be increased. Thus, the hydrogen embrittlement resistance can be improved to suppress premature flaking caused by hydrogen embrittlement.

Preferably, in the aforementioned method of manufacturing a rolling bearing, the nitriding is performed at a temperature of 850°C in an atmosphere ofRX gas with ammonia gas introduced therein. Thus, the raceway surface of the bearing member is nitrided to a sufficient degree to increase the plastic deformation resistance of the bearing member, thereby improving the hydrogen embrittlement resistance of the bearing member.

In the present invention, at least one bearing member of the raceway member and the rolling elements may be made of JIS standard SUJ3.

The present inventors found that, after extensive study, by nitriding a raceway surface of at least one bearing member of raceway members and rolling elements and by optimizing a tempering temperature of the bearing member to increase plastic deformation resistance and resistance to production of atomic vacancy, the hydrogen embrittlement resistance of a rolling bearing is improved. As the at least one bearing member of the raceway member and the rolling elements, the present inventors selected high-carbon chromium bearing steel SUJ3 (JIS standard) which is commonly used for a rolling bearing, in view of material cost.

The present inventors nitrided and quenched the raceway surface of the bearing member, and then optimized the tempering temperature in order to improve the hydrogen embrittlement resistance. Nitriding the raceway surface of the bearing member increases the plastic deformation resistance of the bearing member. The present inventors found that nitriding the raceway surface of the bearing member increases the plastic deformation resistance of the bearing member, thereby improving the hydrogen embrittlement resistance of the bearing member.

The basis for the optimization of the tempering temperature is a hydrogen-enhanced strain-induced vacancy theory, which is a leading hydrogen embrittlement mechanism. Plastic deformation increases atomic vacancy. This theory is based on a finding from scientific experiments that an increase in atomic vacancy density is enhanced when hydrogen is involved. Focusing on this theory, the present inventors found that the hydrogen embrittlement resistance is improved by optimization of the tempering temperature.

Another rolling bearing of the present invention includes a raceway member having an annular raceway, and a plurality of rolling elements being in contact with the raceway member and arranged on the annular raceway in a rollable manner. At least one bearing member of the raceway member and the rolling elements is made of JIS standard SUJ3. The bearing member has been quenched. The bearing member has a nitrided raceway surface. When a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.1 µm. The raceway surface has a Rockwell C scale hardness of not less than HRC 60.5 and not more than HRC 62.1.

Nitriding the raceway surface of the bearing member increases the plastic deformation resistance of the bearing member. Nitriding the raceway surface of the bearing member increases the plastic deformation resistance of the bearing member, thereby improving the hydrogen embrittlement resistance of the bearing member.

Plastic deformation increases atomic vacancy density. A dent depth shows a degree of plastic deformation resistance. In other words, it can be said that a shallow dent depth means high plastic deformation resistance. As one measure, it can be said that the plastic deformation resistance is high when a dent depth is not more than 0.1 µm. After studying relation between the tempering temperature and the dent depth in detail, it was found that, if tempering is performed at not less than 280°C and not more than 320°C, when a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.1 µm.

It was also found that the raceway surface of the bearing member has a Rockwell C scale hardness of not less than HRC 60.5 and not more than HRC 62.1 when the tempering temperature is within a range of not less than 280°C and not more than 320°C.

Therefore, by tempering the bearing member having the nitrided raceway surface at a tempering temperature of not less than 280°C and not more than 320°C, the plastic deformation resistance and resistance to production of atomic vacancy can be increased. Thus, the hydrogen embrittlement resistance can be improved to suppress premature flaking caused by hydrogen embrittlement.

Preferably, in the aforementioned another rolling bearing, the raceway surface has a surface-nitrided concentration of not less than 0.05% by mass and not more than 0.4% by mass.

If the raceway surface has a surface-nitrided concentration of less than 0.05% by mass, a sufficient effect of extended life by the nitriding cannot be obtained. If the raceway surface has a surface-nitrided concentration of more than 0.4% by mass, a large amount of Cr carbonitrides is produced, resulting in lack of the amount of Cr contributing to hardenability. Thus, sufficient hardenability cannot be ensured. Accordingly, by setting the surface-nitrided concentration of the raceway surface to not less than 0.05% by mass and not more than 0.4% by mass, a sufficient effect of extended life by the nitriding can be obtained, to ensure sufficient hardenability.

Preferably, in the aforementioned another rolling bearing, the present inventors selected high-carbon chromium bearing steel SUJ2 (JIS standard) as the rolling elements in view of material cost and availability. The present inventors nitrided and quenched the raceway surfaces of the rolling elements made of SUJ2, and then optimized the tempering temperature in order to improve the hydrogen embrittlement resistance.

Preferably, in the aforementioned another rolling bearing, the rolling elements are made of JIS standard SUJ2. The rolling elements have been quenched. The rolling elements each have a nitrided raceway surface. When a standard rolling bearing steel ball made of SUJ2 and having a diameter of 19.05 mm is pressed against the rolling elements at a load of 3.18 kN and held for 10 seconds before the load is removed, a dent is formed in the rolling elements at a depth of not more than 0.2 µm. The raceway surface has a Rockwell C scale hardness of not less than HRC 61.2 and not more than HRC 63.3.

As one measure, it can be said that the plastic deformation resistance is high when a dent depth is not more than 0.2 µm. After studying relation between the tempering temperature and the dent depth in detail, it was found that, if tempering is performed at not less than 240°C and not more than 300°C, when a standard rolling bearing steel ball made of SUJ2 and having a diameter of 19.05 mm is pressed against the rolling elements at a load of 3.18 kN and held for 10 seconds before the load is removed, a dent is formed in the rolling elements at a depth of not more than 0.2 µm.

It was also found that the raceway surfaces of the rolling elements have a Rockwell C scale hardness of not less than HRC 61.2 and not more than HRC 63.3 when the tempering temperature is within a range of not less than 240°C and not more than 300°C

Therefore, by tempering the rolling elements having the nitrided raceway surfaces at a tempering temperature of not less than 240°C and not more than 300°C, the plastic deformation resistance and resistance to production of atomic vacancy can be increased. Thus, the hydrogen embrittlement resistance can be improved to suppress premature flaking caused by hydrogen embrittlement.

Preferably, in the aforementioned another rolling bearing, the raceway surfaces of the rolling elements have a surface-nitrided concentration of not less than 0.05% by mass and not more than 0.4% by mass.

If the raceway surfaces of the rolling elements have a surface-nitrided concentration of less than 0.05% by mass, a sufficient effect of extended life by the nitriding cannot be obtained. If the raceway surfaces of the rolling elements have a surface-nitrided concentration of more than 0.4% by mass, a large amount of Cr carbonitrides is produced, resulting in lack of the amount of Cr contributing to hardenability. Thus, sufficient hardenability cannot be ensured. Accordingly, by setting the surface-nitrided concentration of the raceway surfaces of the rolling elements to not less than 0.05% by mass and not more than 0.4% by mass, a sufficient effect of extended life by the nitriding can be obtained, to ensure sufficient hardenability.

Preferably, in the aforementioned another rolling bearing, the present inventors selected non-nitrided JIS standard SUJ2 as the rolling elements in view of productivity. As one measure, it can be said that the plastic deformation resistance is high when a dent depth is not more than 0.2 µm. After studying relation between the tempering temperature and the dent depth in detail, it was found that, if tempering is performed at not less than 240°C and not more than 280°C, when a standard rolling bearing steel ball made of SUJ2 and having a diameter of 19.05 mm is pressed against the rolling elements at a load of 1.97 kN and held for 10 seconds before the load is removed, a dent is formed in the rolling elements at a depth of not more than 0.2 µm. Therefore, by performing tempering at a tempering temperature of not less than 240°C and not more than 280°C, the plastic deformation resistance and resistance to production of atomic vacancy can be increased. Thus, the hydrogen embrittlement resistance can be improved to suppress premature flaking caused by hydrogen embrittlement.

Preferably, in the aforementioned another rolling bearing, the entire rolling elements have a Rockwell C scale hardness of not less than HRC 57.0 and not more than HRC 58.9. The entire rolling elements have a Rockwell C scale hardness of not less than HRC 57.0 and not more than HRC 58.9 when the tempering temperature is within a range of not less than 240°C and not more than 280°C.

Preferably, in the aforementioned another rolling bearing, the rolling elements are made of a material containing ceramic. According to the rolling bearing of the present invention, the rolling elements are made of a material containing ceramic that does not exhibit hydrogen embrittlement. Thus, the hydrogen embrittlement resistance can be improved to suppress premature flaking caused by hydrogen embrittlement.

Preferably, the aforementioned another rolling bearing further includes a cage for holding the rolling elements, the cage being made of a material containing metal. Under a condition in which an electric current is passed, premature flaking caused by hydrogen embrittlement is less likely to occur with a metal cage than with a resin cage. According to the rolling bearing of the present invention, therefore, premature flaking caused by hydrogen embrittlement can be suppressed.

Another method of manufacturing a rolling bearing of the present invention including a raceway member having an annular raceway, and a plurality of rolling elements being in contact with the raceway member and arranged on the annular raceway in a rollable manner, includes the following steps. At least one bearing member of the raceway member and the rolling elements which is made of a material of JIS standard SUJ3 is prepared. A raceway surface of the bearing member is nitrided and quenched. The quenched bearing member is tempered at not less than 280°C and not more than 320°C.

Nitriding and quenching the raceway surface of the bearing member increases the plastic deformation resistance of the bearing member. Nitriding the raceway surface of the bearing member increases the plastic deformation resistance of the bearing member, thereby improving the hydrogen embrittlement resistance of the bearing member.

By tempering the quenched bearing member at not less than 280°C and not more than 320°C, the plastic deformation resistance of the bearing member and resistance to production of atomic vacancy in the bearing member can be increased. Thus, the hydrogen embrittlement resistance can be improved to suppress premature flaking caused by hydrogen embrittlement.

Preferably, in the aforementioned another method of manufacturing a rolling bearing, the nitriding is performed at a temperature of 850°C in an atmosphere ofRX gas with ammonia gas introduced therein. Thus, the raceway surface of the bearing member is nitrided to a sufficient degree to increase the plastic deformation resistance of the bearing member, thereby improving the hydrogen embrittlement resistance of the bearing member.

Preferably, the aforementioned one and another rolling bearings further include a main shaft of a motor and a housing arranged to be opposed to the outer peripheral surface of the main shaft, and supports the main shaft to be rotatable relative to the housing.

According to the rolling bearing of the present invention, premature flaking caused by hydrogen embrittlement can be suppressed, to provide a long-life motor rolling bearing under severe operating conditions such as a condition in which water penetrates the bearing, a condition in which a slip occurs, or a condition in which an electric current is passed.

Preferably, the aforementioned one and another rolling bearings further include a main shaft of a machine tool and a housing arranged to be opposed to the outer peripheral surface of the main shaft, and supports the main shaft to be rotatable relative to the housing.

According to the rolling bearing of the present invention, premature flaking caused by hydrogen embrittlement can be suppressed, to provide a long-life machine tool main shaft rolling bearing under severe operating conditions such as a condition in which water penetrates the bearing, a condition in which a slip occurs, or a condition in which an electric current is passed. Furthermore, a long-life machine tool main shaft rolling bearing can also be provided under an operating condition in which an oil film of lubricant has a reduced thickness in order to reduce friction torque of the bearing that causes heat generation during high-speed rotation.

Preferably, the aforementioned one and another rolling bearings further include a rotating-side member of a wheel and a fixed-side member arranged to be opposed to the outer peripheral surface of the rotating-side member, and supports the rotating-side member to be rotatable relative to the fixed-side member.

According to the rolling bearing of the present invention, premature flaking caused by hydrogen embrittlement can be suppressed, to provide a long-life wheel rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which the bearing vibrates, to provide a long-life wheel rolling bearing.

Preferably, the aforementioned one and another rolling bearings further include a main shaft of an alternator and a housing arranged to be opposed to the outer peripheral surface of the main shaft, and supports the main shaft to be rotatable relative to the housing.

According to the rolling bearing of the present invention, premature flaking caused by hydrogen embrittlement can be suppressed, to provide a long-life alternator rolling bearing under severe operating conditions such as a condition in which water penetrates the bearing, a condition in which a slip occurs, or a condition in which an electric current is passed. Premature flaking caused by hydrogen embrittlement can be suppressed particularly under an operating condition in which premature flaking caused by hydrogen embrittlement readily occurs due to a slip between contact elements from rapid acceleration and deceleration, to provide a long-life alternator rolling bearing. Furthermore, premature flaking caused by hydrogen embrittlement can also be suppressed under a condition in which a slip is induced more readily than before due to an increase in applied load and an increase in load variation as a result of serpentinization, to provide a long-life alternator rolling bearing.

Preferably, the aforementioned one and another rolling bearings further include a main shaft and a pulley body arranged to be opposed to the outer peripheral surface of the main shaft, and supports the main shaft to be rotatable relative to the pulley body.

According to the rolling bearing of the present invention, premature flaking caused by hydrogen embrittlement can be suppressed, to provide a long-life pulley rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a slip is induced more readily than before due to an increase in applied load and an increase in load variation as a result of serpentinization, to provide a long-life pulley rolling bearing.

Preferably, the aforementioned one and another rolling bearings further include a car air conditioner electromagnetic clutch pulley and a pulley bearing support member arranged to be opposed to the inner peripheral surface of the car air conditioner electromagnetic clutch pulley, and supports the car air conditioner electromagnetic clutch pulley to be rotatable relative to the pulley bearing support member.

According to the rolling bearing of the present invention, premature flaking caused by hydrogen embrittlement can be suppressed, to provide a long-life car air conditioner electromagnetic clutch pulley rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a slip is induced more readily than before due to an increase in applied load and an increase in load variation as a result of serpentinization, to provide a long-life car air conditioner electromagnetic clutch pulley rolling bearing.

Preferably, the aforementioned one and another rolling bearings further include a pulley shaft of a continuously variable transmission and a housing arranged to be opposed to the outer peripheral surface of the pulley shaft, and supports the pulley shaft to be rotatable relative to the housing.

According to the rolling bearing of the present invention, premature flaking caused by hydrogen embrittlement can be suppressed, to provide a long-life continuously variable transmission rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a differential slip increases during bearing operation by setting a small curvature of groove of inner and outer rings of the bearing in order to reduce an axial clearance of the bearing, to provide a long-life continuously variable transmission rolling bearing.

Preferably, in the aforementioned one and another rolling bearings, the rolling bearing is a shell type needle roller bearing. When the shell type needle roller bearing is used under a condition in which a slip occurs such as rapid acceleration and deceleration, particularly when used to support an air compressor of a vehicle rapidly accelerated and decelerated by switching of an electromagnetic clutch, when used to support an ABS (Antilock Brake System) pump rapidly accelerated during startup, or when used at a big end of a con rod of a versatile engine, a slip occurs readily in rolling elements, which may cause premature flaking caused by hydrogen embrittlement.

According to the rolling bearing of the present invention, premature flaking caused by hydrogen embrittlement can be suppressed under such conditions, to provide a long-life shell type needle roller bearing.

Preferably, in the aforementioned one and another rolling bearings, the rolling bearing is a solid type needle roller bearing. When the solid type needle roller bearing is used under a condition in which a slip occurs such as rapid acceleration and deceleration, particularly when used to support an air compressor of a vehicle rapidly accelerated and decelerated by switching of an electromagnetic clutch, when used to support a transmission rapidly accelerated during startup, or when used at a big end of a con rod of a versatile engine, a slip occurs readily between contact elements, which may cause premature flaking caused by hydrogen embrittlement.

According to the rolling bearing of the present invention, premature flaking caused by hydrogen embrittlement can be suppressed under such conditions, to provide a long-life solid type needle roller bearing.

Preferably, in the aforementioned one and another rolling bearings, the rolling bearing is a needle roller thrust bearing. In the needle roller thrust bearing, a slip occurs constantly between rolling elements and rolling rings during operation due to the difference in peripheral speed between the inner and outer sides of the rolling elements, which may cause premature flaking caused by hydrogen embrittlement. In the needle roller thrust bearing, premature flaking caused by hydrogen embrittlement may also occur under a condition in which a slip occurs such as rapid acceleration and deceleration. According to the rolling bearing of the present invention, premature flaking caused by hydrogen embrittlement can be suppressed under such conditions, to provide a long-life needle roller thrust bearing.

Preferably, in the aforementioned one and another rolling bearings, the rolling bearing includes a cage. When the needle roller bearing with a cage is used under a condition in which a slip occurs such as rapid acceleration and deceleration, particularly when used as an idler bearing of a transmission of a vehicle rapidly accelerated during startup, when used as a planetary pinion support bearing of a CVT (Continuously Variable Transmission), or when used as a big end bearing of a con rod of a two-wheel engine or a versatile engine, a slip occurs readily in rolling elements, which may cause premature flaking caused by hydrogen embrittlement. According to the rolling bearing of the present invention, premature flaking caused by hydrogen embrittlement can be suppressed under such conditions, to provide a long-life needle roller bearing with a cage.

### ADVANTAGEOUS EFFECTS OF INVENTION

As described above, according to the rolling bearing and the method of manufacturing the rolling bearing of the present invention, premature flaking caused by hydrogen embrittlement can be suppressed.

### BRIEF DESCRIPTION OF DRAWINGS

Fig. 1 is a schematic cross sectional view showing the structure of a motor including a rolling bearing in one embodiment of the present invention.
Fig. 2 is a schematic cross sectional view showing the structure of a grease-sealed deep groove ball bearing as a motor rolling bearing in one embodiment of the present invention.
Fig. 3 is a schematic partial cross sectional view showing a substantial part of Fig. 2 in an enlarged manner.
Fig. 4 shows the outline of a method of manufacturing a rolling bearing in one embodiment of the present invention.
Fig. 5 is a diagram for illustrating a heat treatment step included in the method of manufacturing a rolling bearing in one embodiment of the present invention.
Fig. 6 is a schematic cross sectional view showing a structure around a main shaft of a machine tool including a machine tool main shaft rolling bearing in one embodiment of the present invention.
Fig. 7 is a schematic cross sectional view showing the structure of an angular contact ball bearing as a machine tool main shaft rolling bearing in one embodiment of the present invention.
Fig. 8 is a schematic cross sectional view showing the structure of a cylindrical roller bearing as a machine tool main shaft rolling bearing in one embodiment of the present invention.
Fig. 9 is a schematic partial cross sectional view of a lubrication device including a rolling bearing lubricated with a small amount of lubricant as a machine tool main shaft rolling bearing in one embodiment of the present invention.
Fig. 10 is a schematic partial cross sectional view of a lubrication device including another rolling bearing lubricated with a small amount of lubricant as a machine tool main shaft rolling bearing in one embodiment of the present invention.
Fig. 11 is a schematic cross sectional view showing the structure of a wheel including a wheel rolling bearing in one embodiment of the present invention.
Fig. 12 is a schematic cross sectional view showing the structure of a double row angular contact ball bearing as a wheel rolling bearing in one embodiment of the present invention.
Fig. 13 is a schematic cross sectional view showing the structure of an alternator including an alternator rolling bearing in one embodiment of the present invention.
Fig. 14 is a schematic cross sectional view showing the structure of a pulley including a pulley rolling bearing in one embodiment of the present invention.
Fig. 15 is a schematic cross sectional view showing the structure of a compressor with a car air conditioner electromagnetic clutch pulley mechanism including a car air conditioner electromagnetic clutch pulley rolling bearing in one embodiment of the present invention.
Fig. 16 is a schematic cross sectional view showing the structure of a continuously variable transmission including a continuously variable transmission rolling bearing in one embodiment of the present invention.
Fig. 17 is a schematic cross sectional view showing the structure of a shell type needle roller bearing in one embodiment of the present invention.
Fig. 18 is a schematic cross sectional view showing the structure of a solid type needle roller bearing in one embodiment of the present invention.
Fig. 19 is a schematic cross sectional view showing the structure of a needle roller thrust bearing in one embodiment of the present invention.
Fig. 20 is a schematic cross sectional view showing the structure of a needle roller bearing with a cage made of a metal material in one embodiment of the present invention.
Fig. 21 is a schematic cross sectional view showing the structure of a needle roller bearing with a cage made of a polymeric material in one embodiment of the present invention.
Fig. 22 shows relation between a tempering temperature and a dent depth in a dent formation test in Example 1 of the present invention.
Fig. 23 shows relation between the tempering temperature and HRC hardness in an HRC hardness test in Example 1 of the present invention.
Fig. 24 is a schematic diagram showing a state where a test piece has been buried in resin in a surface-nitrided concentration measurement test in Example 1 of the present invention.
Fig. 25 shows relation between the depth from a surface and nitrogen concentration in the surface-nitrided concentration measurement test in Example 1 of the present invention.
Fig. 26 is a schematic side view showing a tapered outer ring test piece in a rolling fatigue test in water-contaminated oil in Example 1 of the present invention.
Fig. 27 is a schematic cross sectional view showing a state where the tapered outer ring test piece in the rolling fatigue test in water-contaminated oil in Example 1 of the present invention has been combined with an inner ring and steel balls of an angular contact ball bearing.
Fig. 28 shows relation between a tempering temperature and a dent depth in a dent formation test in Example 2 of the present invention.
Fig. 29 shows relation between the tempering temperature and HRC hardness in an HRC hardness test in Example 2 of the present invention.
Fig. 30 shows relation between a tempering temperature and a dent depth in a dent formation test in Example 3 of the present invention.
Fig. 31 shows relation between the tempering temperature and HRC hardness in an HRC hardness test in Example 3 of the present invention.
Fig. 32 shows relation between the depth from a surface and nitrogen concentration in a surface-nitrided concentration measurement test in Example 3 of the present invention.

### DESCRIPTION OF EMBODIMENTS

An embodiment of the present invention will be described below with reference to the drawings.

First, the structure of a motor including a rolling bearing in one embodiment of the present invention is described.

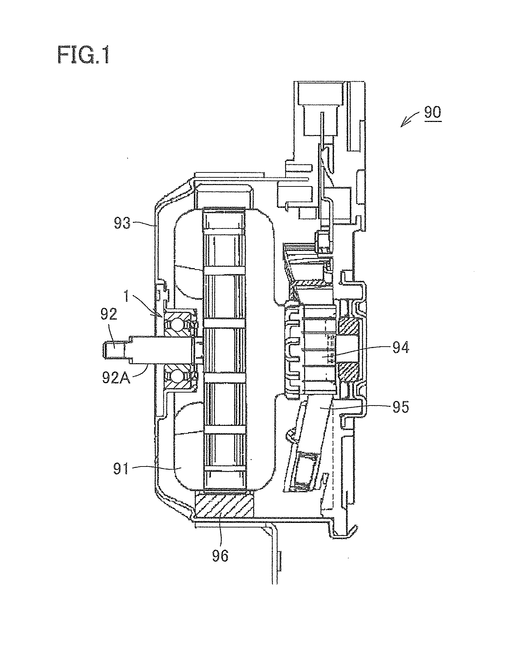

Referring to Fig. 1, a motor 90 in one embodiment of the present invention includes a rotor 91 having a discoidal shape and including a coil, a frame (housing) 93 arranged to enclose rotor 91, and a main shaft 92 connected to a part including the center (rotation axis) of rotor 91 while passing through frame 93, and constituted to be axially rotatable along with rotor 91. A grease-sealed deep groove ball bearing 1 as a motor rolling bearing is fitted between an outer peripheral surface 92A of main shaft 92 and a portion of frame 93 opposed to outer peripheral surface 92A of main shaft 92. In other words, grease-sealed deep groove ball bearing 1 is a motor rolling bearing supporting main shaft 92 of motor 90 to be rotatable relative to frame 93 arranged to be opposed to outer peripheral surface 92A of main shaft 92.

Motor 90 further includes a stator 96 having a magnet arranged to be fixed to frame 93 to be opposed to the outer peripheral surface of rotor 91 in frame 93, a commutator 94 connected to a part of rotor 91 opposite to the side where main shaft 92 projects from frame 93 when viewed from rotor 91, and constituted to be rotatable along with rotor 91, and a brush 95 arranged to be fixed to frame 93 to be in contact with commutator 94.

The aforementioned grease-sealed deep groove ball bearing 1 is now described.

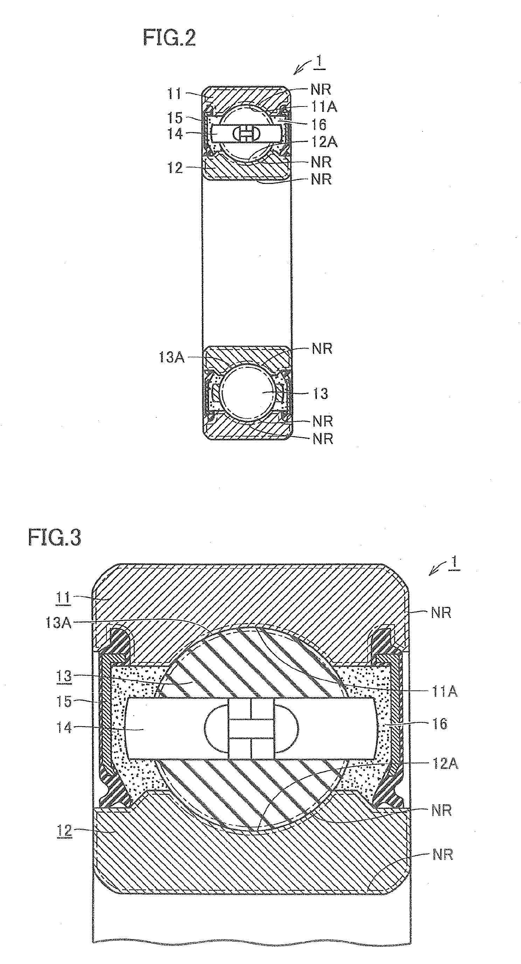

Referring to Figs. 2 and 3, grease-sealed deep groove ball bearing 1 includes an outer ring 11 as a first raceway member, an inner ring 12 as a second raceway member, balls 13 as a plurality of rolling elements, a cage 14, and sealing members 15. An outer ring raceway surface 11A as an annular first raceway surface is formed on the inner circumferential surface of outer ring 11. An inner ring raceway surface 12A as an annular second raceway surface opposed to outer ring raceway surface 11A is formed on the outer circumferential surface of inner ring 12. Ball raceway surfaces 13A (surfaces of balls 13) as rolling element raceway surfaces are formed on the plurality of balls 13. Balls 13 come into contact with outer ring raceway surface 11A and inner ring raceway surface 12A on ball raceway surfaces 13A, and are circumferentially arranged at a prescribed pitch by annular cage 14 to be held on an annular raceway in a rollable manner.

The pair of sealing members 15 are arranged on opposite end portions in a width direction of outer ring 11 and inner ring 12, respectively, between outer ring 11 and inner ring 12, to close a space between outer ring 11 and inner ring 12, more specifically a raceway space which is a space between outer ring raceway surface 11A and inner ring raceway surfaces 12A. According to the aforementioned structure, outer ring 11 and inner ring 12 of grease-sealed deep groove ball bearing 1 are rotatable relative to each other. A grease composition 16 is sealed in the aforementioned raceway space.

In one rolling bearing in one embodiment of the present invention, at least one bearing member of outer ring 11, inner ring 12 as raceway members and balls 13 as rolling elements is made of JIS standard SUJ2. The at least one bearing member of outer ring 11, inner ring 12 as raceway members and balls 13 as rolling elements has been quenched. The at least one bearing member of outer ring 11, inner ring 12 as raceway members and balls 13 as rolling elements has a nitrided raceway surface 11A, 12A, 13A. A nitrided region NR is formed inward from the surfaces of outer ring 11, inner ring 12 and balls 13 as rolling elements. Although nitrided region NR is not illustrated in the following drawings, it is similarly formed inward from the surfaces of outer ring 11, inner ring 12 and balls 13 as rolling elements.

When a standard rolling bearing steel ball made of SUJ2 and having a diameter of 19.05 mm is pressed against the at least one bearing member of outer ring 11, inner ring 12 as raceway members and balls 13 as rolling elements at a load of 3.18 kN and held for 10 seconds before the load is removed, a dent is formed in the bearing member at a depth of not more than 0.2 µm. The raceway surface of the bearing member has a Rockwell C scale hardness of not less than HRC 61.2 and not more than HRC 63.3.

Raceway surface 11A, 12A, 13A of the at least one bearing member of outer ring 11, inner ring 12 as raceway members and balls 13 as rolling elements has a surface-nitrided concentration of not less than 0.05% by mass and not more than 0.4% by mass.

Non-nitrided JIS standard SUJ2 may be selected for balls 13 as rolling elements. In this case, when a standard rolling bearing steel ball made of SUJ2 and having a diameter of 19.05 mm is pressed against balls 13 at a load of 1.97 kN and held for 10 seconds before the load is removed, a dent is formed in the bearing members at a depth of not more than 0.2 µm.

The entire rolling elements have a Rockwell C scale hardness of not less than HRC 57.0 and not more than HRC 58.9.

It is preferable that balls 13 as rolling elements be made of a material containing ceramic. Silicon nitride, sialon or the like may be adopted as the ceramic.

If the ceramic is a sintered body mainly composed of β sialon which is one sialon, the ceramic is sintered under low pressure (e.g., not more than 1 MPa), and can therefore be manufactured at lower cost than a sintered body mainly composed of silicon nitride which is pressured and sintered under a pressure of not less than 10 MPa.

The sintered body mainly composed of β sialon is a sintered body containing the β sialon as a main component and having a remainder formed of an impurity. The sialon is expressed in the composition formula of Si_{6-Z}AL_{Z}N_{8-Z}, and composed such that Z satisfies the range of 0.1≤Z≤3.5. The impurity includes those derived from a source material or entering during the production process, and also includes an unavoidable impurity. As a sintering additive, at least one of an oxide, a nitride and an oxynitride of magnesium (Mg), aluminum (Al), silicon (Si), titanium (Ti) and a rare earth element can be adopted. It is desirable that the sintering additive hold not more than 20% by mass of the sintered body.

It is preferable that cage 14 for holding balls 13 as rolling elements be made of a material containing metal.

The operation of motor 90 is now described. Referring to Fig. 1, a current supplied to brush 95 from a not-shown power source via wiring flows through the coil of rotor 91 through commutator 94. At this time, due to an electromagnetic force generated by the current flowing through the coil of rotor 91 and by a magnetic field formed by stator 96 including the magnet, rotor 91 rotates around the axis of main shaft 92 relative to frame 93. Furthermore, when rotor 91 rotates by a prescribed angle, the direction of the current flowing through the coil of rotor 91 is reversed by the action of commutator 94 and brush 95, causing further rotation of rotor 91. When this process is repeated, rotor 91 continuously rotates relative to the housing, and the rotation is taken out by main shaft 92.

A method of manufacturing the motor rolling bearing in one embodiment of the present invention will now be described.

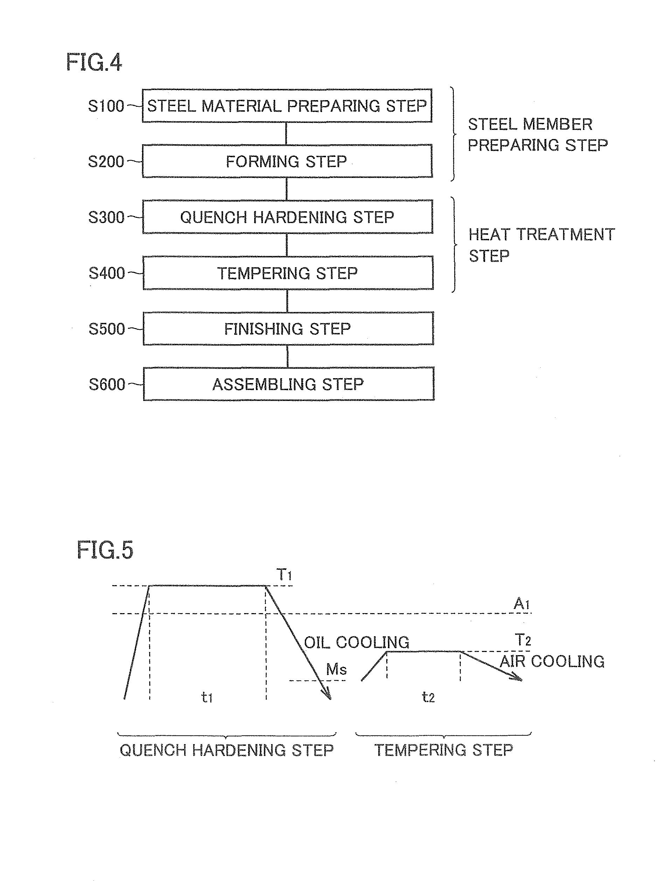

Referring to Fig. 4, first, in a step (S100), a steel material preparing step of preparing a steel material made of JIS standard SUJ2 is performed. Specifically, for example, steel bars and steel wires made of JIS standard SUJ2 are prepared.

Next, in a step (S200), a forming step of preparing steel members formed into rough shapes of the bearing members of the motor rolling bearing is performed by forming the aforementioned steel material. Specifically, steel members formed into rough shapes of outer ring 11, inner ring 12 and balls 13 shown in Figs. 2 and 3 are prepared by performing working such as forging and machining on the aforementioned steel bars and steel wires. The aforementioned steps (S100) and (S200) constitute a steel member preparing step of preparing the steel members formed into rough shapes of the bearing members of the motor rolling bearing.

Next, in a step (S300), a quench hardening step of quench hardening the steel members is performed by cooling the steel members from a temperature of not less than a point A1 to a temperature of not more than a point MS. Next, in a step (S400), a tempering step of tempering the quench hardened steel members is performed by heating the steel members to a temperature range of not less than 240°C and not more than 300°C. The aforementioned steps (S300) and (S400) constitute a heat treatment step of heat-treating the steel members. The details of this heat treatment step will be described later.

Next, in a step (S500), a finishing step is performed. Specifically, finishing such as grinding is performed on the steel members subjected to the heat treatment step, whereby outer ring 11, inner ring 12 and balls 13 are finished. Thus, the method of manufacturing the bearing members of the motor rolling bearing in one embodiment of the present invention is completed, and outer ring 11, inner ring 12 and balls 13 as the bearing members of the motor rolling bearing are completed.

Further, in a step (S600), an assembling step is performed. Specifically, outer ring 11, inner ring 12 and balls 13 prepared in the steps (S100) to (S500) are combined with separately prepared cage 14 and the like and assembled into grease-sealed deep groove ball bearing 1 as a motor rolling bearing in one embodiment of the present invention. Thus, the method of manufacturing the motor rolling bearing in one embodiment of the present invention is completed, and grease-sealed deep groove ball bearing 1 as a motor rolling bearing is completed.

The details of the heat treatment step are now described. In Fig. 5, the transverse direction shows time, and indicates that the time elapses rightward. In Fig. 5, the vertical direction shows temperature, and indicates that the temperature increases upward.

Referring to Fig. 5, the steel members prepared in the step (S200) are first heated to a temperature T1 of not less than point A1, and held for a time t1. At this time, the steel members are heated in an atmosphere of RX gas with ammonia gas introduced therein, for example. Thus, the surfaces of the steel members to serve as the raceway surfaces of the bearing members are nitrided. Then, the steel members are dipped into oil (oil cooling), for example, to be cooled from the temperature of not less than point A1 to the temperature of not more than point MS. Thus, quenching is completed. The quench hardening step is completed through the aforementioned steps.

Then, the tempering step is performed by heating the quench hardened steel members to a temperature T2 of not more than point A1, holding the steel members for t2 and then air-cooling (standing to cool) the steel members to room temperature, for example. The heat treatment step in one embodiment of the present invention is completed through the aforementioned steps.

Temperature T1 is a temperature of 850°C, for example. Time t1 is 180 minutes, for example.

Temperature T2 is a temperature of not less than 240°C and not more than 300°C, for example. Time t2 is 120 minutes, for example.

Point A1 denotes a point corresponding to a temperature at which the structure of steel starts transforming from ferrite to austenite when the steel is heated. Point MS denotes a point corresponding to a temperature at which the structure of steel starts transforming to martensite when austenited steel is cooled.

According to the aforementioned method of manufacturing the bearing members of the motor rolling bearing in one embodiment of the present invention, in the steel member preparing step, steel members made of JIS standard SUJ2 are prepared in view of material cost and availability. Then, in the quench hardening step, quenching is performed as nitriding at a temperature of 850°C in an atmosphere of RX gas with ammonia gas introduced therein. Then, in the tempering step, tempering is performed by heating the steel members to not less than 240°C and not more than 300°C. Consequently, according to the aforementioned method of manufacturing the bearing members of the motor rolling bearing in one embodiment of the present invention, the plastic deformation resistance of the steel constituting the bearing members of the motor rolling bearing and resistance to production of atomic vacancy in the steel can be increased.

The rolling elements may be made of non-nitrided JIS standard SUJ2 in view of productivity. A method of manufacturing a motor rolling bearing including rolling elements made of non-nitrided JIS standard SUJ2 will now be described.

Referring to Fig. 4, first, in a step (S100), a steel material preparing step of preparing a steel material made of JIS standard SUJ2 is performed. Specifically, for example, steel bars and steel wires made of JIS standard SUJ2 are prepared.

Next, in a step (S200), a forming step of preparing steel members formed into rough shapes of the rolling elements of the motor rolling bearing is performed by forming the aforementioned steel material. Specifically, steel members formed into rough shapes of balls 13 shown in Figs. 2 and 3 are prepared by performing working such as forging and machining on the aforementioned steel bars and steel wires. The aforementioned steps (S100) and (S200) constitute a steel member preparing step of preparing the steel members formed into rough shapes of the bearing members of the motor rolling bearing.

Next, in a step (S300), a quench hardening step of quench hardening the steel members is performed by cooling the steel members from a temperature of not less than a point A1 to a temperature of not more than a point MS. Next, in a step (S400), a tempering step of tempering the quench hardened steel members is performed by heating the steel members to a temperature range of not less than 240°C and not more than 280°C. The aforementioned steps (S300) and (S400) constitute a heat treatment step of heat-treating the steel members. The details of this heat treatment step will be described later.

Next, in a step (S500), a finishing step is performed. Specifically, finishing such as grinding is performed on the steel members subjected to the heat treatment step, whereby balls 13 are finished. Thus, balls 13 of the motor rolling bearing in one embodiment of the present invention are completed.

Further, in a step (S600), an assembling step is performed. Specifically, balls 13 prepared in the steps (S100) to (S500) are combined with separately prepared outer ring 11, inner ring 12, cage 14 and the like and assembled into grease-sealed deep groove ball bearing 1 as a motor rolling bearing in one embodiment of the present invention. Thus, the method of manufacturing the motor rolling bearing including the rolling elements made of non-nitrided JIS standard SUJ2 in one embodiment of the present invention is completed, and grease-sealed deep groove ball bearing 1 as a motor rolling bearing is completed.

The details of the heat treatment step are now described. In Fig. 5, the transverse direction shows time, and indicates that the time elapses rightward. In Fig. 5, the vertical direction shows temperature, and indicates that the temperature increases upward.

Referring to Fig. 5, the steel members prepared in the step (S200) are first heated to a temperature T1 of not less than point A1, and held for a time t1. At this time, the steel members are heated in an RX gas atmosphere, for example. Then, the steel members are dipped into oil (oil cooling), for example, to be cooled from the temperature of not less than point A1 to the temperature of not more than point MS. Thus, through hardening is completed. The quench hardening step is completed through the aforementioned steps.

Then, the tempering step is performed by heating the quench hardened steel members to a temperature T2 of not more than point A1, holding the steel members for t2 and then air-cooling (standing to cool) the steel members to room temperature, for example. The heat treatment step in one embodiment of the present invention is completed through the aforementioned steps.

Temperature T1 is a temperature of 850°C, for example. Time t1 is 80 minutes, for example.

Temperature T2 is a temperature of not less than 240°C and not more than 280°C, for example. Time t2 is 120 minutes, for example.

A grease-sealed deep groove ball bearing has been described above as an example of the rolling bearing in one embodiment of the present invention. In addition, a motor has been described as an example of a device to which the rolling bearing in one embodiment of the present invention is applied. The rolling bearing in one embodiment of the present invention is not limited to the above description, but may be an angular contact ball bearing, a cylindrical roller bearing or the like. Moreover, the rolling bearing in one embodiment of the present invention may be applied to a machine tool main shaft rolling bearing. An angular contact ball bearing and a cylindrical roller bearing will now be described as other examples of the rolling bearing in one embodiment of the present invention, and the structures of machine tolls including these bearings will be described.

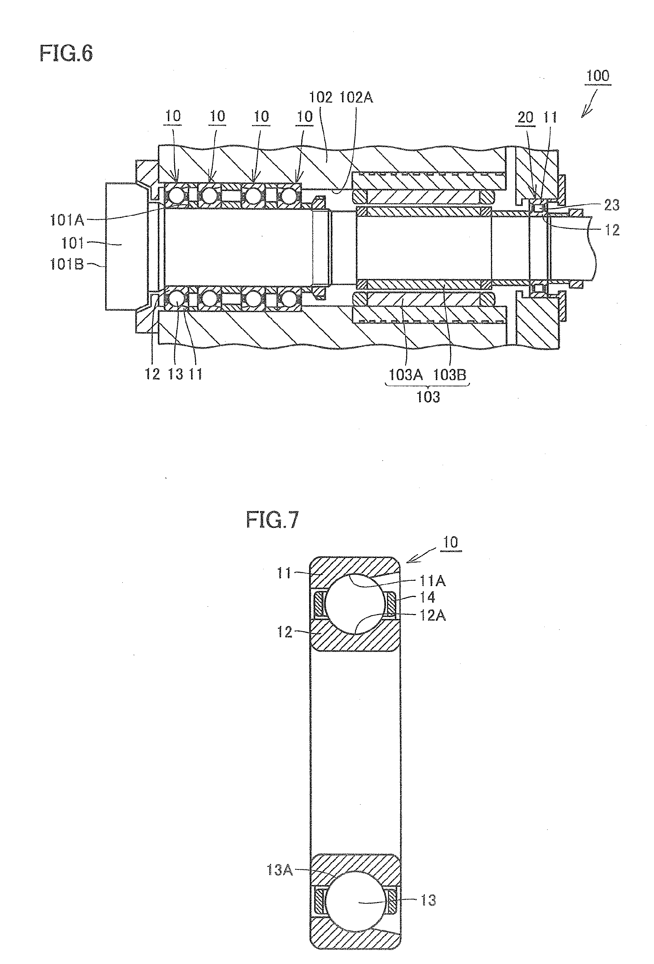

Referring to Fig. 6, a machine tool 100 in one embodiment of the present invention includes a main shaft 101 having a cylindrical shape, a housing 102 enclosing the outer peripheral surface of main shaft 101, and angular contact ball bearings 10 (front bearings) and a cylindrical roller bearing 20 (rear bearing) as machine tool main shaft rolling bearings arranged to be fitted between main shaft 101 and housing 102 such that the outer circumferential surfaces of their outer rings are in contact with an inner wall 102A of the housing and the inner circumferential surfaces of their inner rings are in contact with an outer peripheral surface 101A of main shaft 101. Thus, main shaft 101 is supported to be axially rotatable relative to housing 102.

A motor rotor 103B is set on main shaft 101 to enclose part of outer peripheral surface 101A, while a motor stator 103A is set on inner wall 102A of housing 102 in a position opposed to motor rotor 103B. Motor stator 103A and motor rotor 103B constitute a motor 103 (built-in motor). Thus, main shaft 101 is rotatable relative to housing 102 due to power of motor 103.

In other words, angular contact ball bearings 10 and cylindrical roller bearing 20 are machine tool main shaft rolling bearings supporting rotationally driven main shaft 101 to be rotatable relative to housing 102 which is a member arranged adjacently to main shaft 101 in machine tool 100 working a workpiece by rotation of main shaft 101.

The aforementioned angular contact ball bearings 10 are now described.

Referring to Fig. 7, each angular contact ball bearing 10 includes an outer ring 11 as a first raceway member which is a bearing member of a machine tool main shaft rolling bearing, an inner ring 12 as a second raceway member, balls 13 as a plurality of rolling elements, and a cage 14. An outer ring raceway surface 11A as an annular first raceway surface is formed on outer ring 11. An inner ring raceway surface 12A as an annular second raceway surface opposed to outer ring raceway surface 11A is formed on inner ring 12. Ball raceway surfaces 13A (surfaces of balls 13) as rolling element raceway surfaces are formed on the plurality of balls 13. Balls 13 come into contact with outer ring raceway surface 11A and inner ring raceway surface 12A on ball raceway surfaces 13A, and are circumferentially arranged at a prescribed pitch by annular cage 14 to be held on an annular raceway in a rollable manner. Thus, outer ring 11 and inner ring 12 are rotatable relative to each other.

In angular contact ball bearing 10, straight lines connecting contact points between balls 13 and outer ring 11 and contact points between balls 13 and inner ring 12 form angles relative to a radial direction (direction perpendicular to a rotation axis of angular contact ball bearing 10). When a load in the radial direction is applied, therefore, a component of force in an axial direction (direction of the rotation axis of angular contact ball bearing 10) is produced. Referring to Fig. 6, two angular contact ball bearings 10 of the same direction are arranged on a front side (side of a tip 101B of main shaft 101) while two angular contact ball bearings 10 of a direction opposite to the front side are arranged on a rear side (side of motor rotor 103B) in machine tool 100 in one embodiment of the present invention, thereby canceling the component of force.

The aforementioned cylindrical roller bearing 20 is now described.

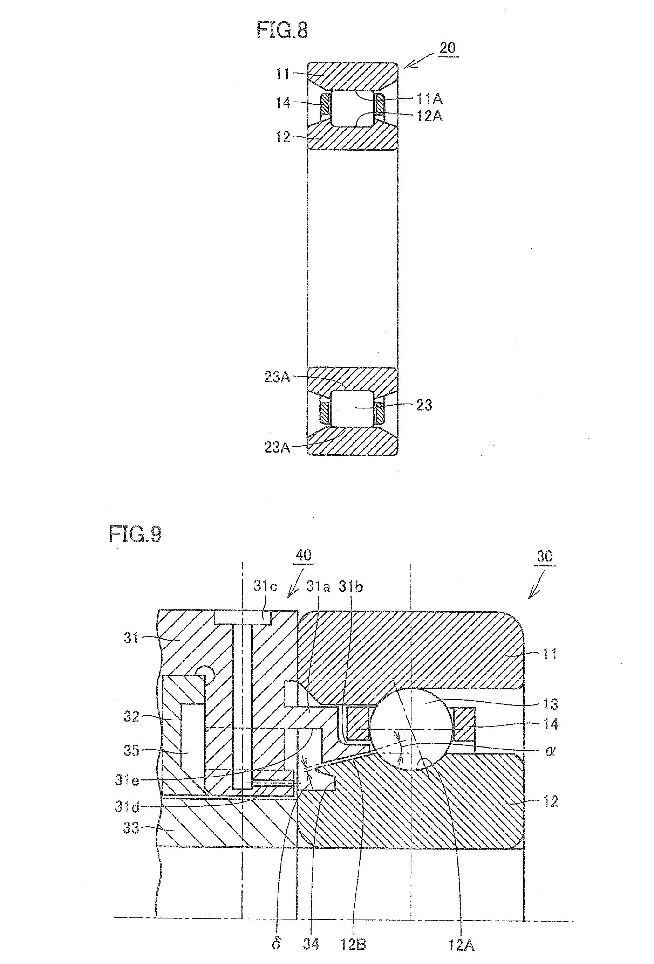

Referring to Fig. 8, cylindrical roller bearing 20 basically has a structure similar to that of the aforementioned angular contact ball bearing 10, and has a similar effect. In the structures of raceway members and rolling elements, however, cylindrical roller bearing 20 is different from angular contact ball bearing 10.

That is, cylindrical roller bearing 20 includes an outer ring 11 as a first raceway member which is a bearing member of a machine tool main shaft rolling bearing, an inner ring 12 as a second raceway member, cylindrical rollers 23 as a plurality of rolling elements, and a cage 14. An outer ring raceway surface 11A as an annular first raceway surface is formed on outer ring 11. An inner ring raceway surface 12A as an annular second raceway surface opposed to outer ring raceway surface 11A is formed on inner ring 12. Roller raceway surfaces 23A (outer circumferential surfaces of cylindrical rollers 23) as rolling element raceway surfaces are formed on the plurality of cylindrical rollers 23. Cylindrical rollers 23 come into contact with outer ring raceway surface 11A and inner ring raceway surface 12A on roller raceway surfaces 23A, and are circumferentially arranged at a prescribed pitch by annular cage 14 to be held on an annular raceway in a rollable manner. Thus, outer ring 11 and inner ring 12 are rotatable relative to each other.

The operation of machine tool 100 is now described. Referring to Fig. 6, power is supplied to motor stator 103A of motor 103 from a not-shown power source, thereby generating a driving force axially rotating motor rotor 103B. Thus, main shaft 101 supported by angular contact ball bearings 10 and cylindrical roller bearing 20 to be rotatable relative to housing 102 rotates along with motor rotor 103B relative to housing 102. Thus, main shaft 101 so rotates that a not-shown tool mounted on tip 101B of main shaft 101 can work a workpiece by cutting and grinding the workpiece.

A method of manufacturing the machine tool main shaft rolling bearing in one embodiment of the present invention is similar to the aforementioned method of manufacturing the motor rolling bearing except for the forming step. In the forming step, steel members formed into rough shapes of outer ring 11, inner ring 12, balls 13 and cylindrical rollers 13 shown in Figs. 7 and 8 are prepared. The description of the remaining steps of the manufacturing method will not be repeated.

Next, a lubrication device including a rolling bearing lubricated with a small amount of lubricant will be described as another example of the machine tool main shaft rolling bearing in one embodiment of the present invention.

It is noted that the same components as those described above in the structure in one embodiment of the present invention are denoted by the same reference signs, and the description thereof will not be repeated.

Referring to Fig. 9, a lubrication device 40 mainly includes an angular contact ball bearing 30, a lubricant introducing member 31, a lid member 32, and an inner ring spacer 33. To facilitate visualization, Fig. 9 shows a part around a portion where the lubricant is introduced and does not show a main shaft, a housing and the like to which lubrication device 40 is applied.

Inner ring 12 of angular contact ball bearing 30 includes an oil receiving circumferential groove 34 for receiving lubricant discharged from lubricant introducing member 31. Oil receiving circumferential groove 34 is provided at an end surface adjacent to lubricant introducing member 31. On an outer diameter surface of inner ring 12, a slope portion 12B having a larger diameter on the inner ring raceway surface 12A side is formed. Slope portion 12B is formed to guide the lubricant accumulated in oil receiving circumferential groove 34 to inner ring raceway surface 12A of inner ring 12 by centrifugal force acting on the lubricant and surface tension.

Lubricant introducing member 31 includes a rib-shaped portion 31a extending axially from its side surface toward angular contact ball bearing 30. A sealing portion 31b is formed at the tip of rib-shaped portion 31a. Sealing portion 31b is arranged in the vicinity of ball 13 between the inner diameter surface of cage 14 and inner ring 12. Sealing portion 31b has an inner diameter surface formed as an inclined surface at an angle α the same as that of slope portion 12B of inner ring 12. Sealing portion 31b is arranged with a gap δ from slope portion 12B of inner ring 12. Lubricant introducing member 31 includes a lubricant supply path 31c and a discharge outlet 31d. Lubricant supply path 31c is in communication with discharge outlet 31d. Discharge outlet 31d opens to be opposed to oil receiving circumferential groove 34 of inner ring 12.

At a portion of lubricant introducing member 31 closer to a base end than sealing portion 31b of rib-shaped portion 31a, a drain oil circumferential groove 31e is formed to open to the inner diameter side. Drain oil circumferential groove 31e is in communication with a not-shown drain oil collection path, through which drain oil is collected.

In lubrication device 40, a very small amount of the oil discharged from discharge outlet 31d of lubricant introducing member 31 is used as the lubricant for angular contact ball bearing 30, while most of the oil is supplied to cool inner ring 12. The very small amount of the oil discharged to oil receiving circumferential groove 34 of inner ring 12 is introduced into angular contact ball bearing 30 along slope portion 12B by centrifugal force associated with rotation of inner ring 12 and surface tension of the oil, to be used as the lubricant.

As this lubricant, a lubricant having very low viscosity corresponding to ISO VG2 is used, for example.

A method of manufacturing this rolling bearing lubricated with a small amount of lubricant is similar to the aforementioned method of manufacturing the motor rolling bearing except for the forming step. In the forming step, steel members formed into rough shapes of outer ring 11, inner ring 12 and balls 13 shown in Fig. 9 are prepared. The description of the remaining steps of the manufacturing method will not be repeated.

In lubrication device 40, a reduced amount of oil is used and further the low viscosity lubricant is utilized, thereby attaining reduced torque.

A lubrication device including another rolling bearing lubricated with a small amount of lubricant will be further described.

It is noted that the same components as those described above in the structure in one embodiment of the present invention are denoted by the same reference signs, and the description thereof will not be repeated.

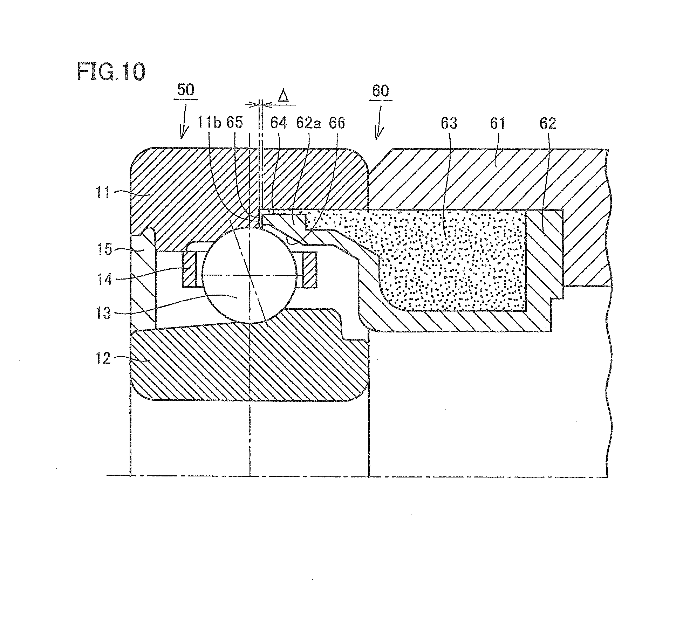

Referring to Fig. 10, a lubrication device 60 mainly includes an angular contact ball bearing 50, a spacer 61, and a grease reservoir forming member 62. To facilitate visualization, Fig. 10 shows a part around a portion where the lubricant is introduced and does not show a main shaft, a housing and the like to which lubrication device 60 is applied.

Outer ring 11 of angular contact ball bearing 50 is provided with a stepped surface 11b extending away from ball 13 toward the outer diameter of outer ring 11.

Grease reservoir forming member 62 is a ring-shaped member having a grease reservoir 63 for accumulating grease therein.

An internal space between spacer 61 and grease reservoir forming member 62 constitutes grease reservoir 63. By sealing grease in grease reservoir 63 and subsequently causing the outer side of a side wall portion of grease reservoir forming member 62 to abut the inner side of a side wall portion of spacer 61, grease reservoir forming member 62 is positioned in the direction of the axis of a not-shown main shaft relative to spacer 61.

A not-shown sealing member is interposed between spacer 61 and grease reservoir forming member 62. This sealing member prevents leakage of grease.

A tip portion 62a of grease reservoir forming member 62 is arranged along the inner diameter surface of outer ring 11. The tip of tip portion 62a is arranged to be opposed to stepped surface 11b. A flow path 64 and a gap 65 are formed between tip portion 62a and outer ring 11.

A peripheral wall of tip portion 62a and a portion of the inner diameter surface of outer ring 11 opposed to the peripheral surface form flow path 64. An end surface of tip portion 62a and stepped surface 11b opposed to the end surface form gap 65 having a minute amount of gap Δ in the direction of the axis of a not-shown main shaft. Gap 65 is in communication with flow path 64, and opens to an edge portion of the outer ring raceway surface. The amount of gap Δ of gap 65 is set to 0.05 to 0.1 mm, for example.

An inner diameter surface continuous with the end surface of tip portion 62a has a tapered surface 66 adjacent to ball 13, to facilitate the accumulation of lubricant between tapered surface 66 and ball 13. The distance between tapered surface 66 and ball 13 is preferably a minimum gap having a size that allows the oil adhered to tapered surface 66 to be transferred to the surface of ball 13, and is set to not more than 0.2 mm, for example.

A method of manufacturing this another rolling bearing lubricated with a small amount of lubricant is similar to the aforementioned method of manufacturing the motor rolling bearing except for the forming step. In the forming step, steel members formed into rough shapes of outer ring 11, inner ring 12 and balls 13 shown in Fig. 10 are prepared. The description of the remaining steps of the manufacturing method will not be repeated.

In lubrication device 60, a small amount of base oil is introduced into angular contact ball bearing 50 from grease reservoir 63 by utilizing a capillary phenomenon. In this method, torque is not generated by stirring of a thickening agent of the grease by cage 14 and the like. Therefore, only a small amount of heat is generated, thereby allowing high-speed operation.

The rolling bearing in one embodiment of the present invention may be applied to a wheel rolling bearing. Next, a wheel rolling bearing will be described as another example of the rolling bearing in one embodiment of the present invention, and the structure of a wheel including this bearing will be described.

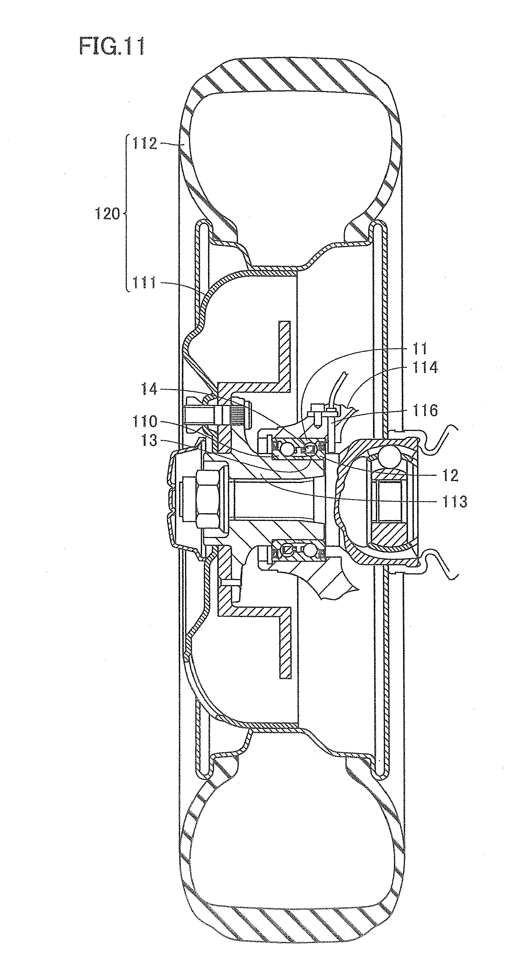

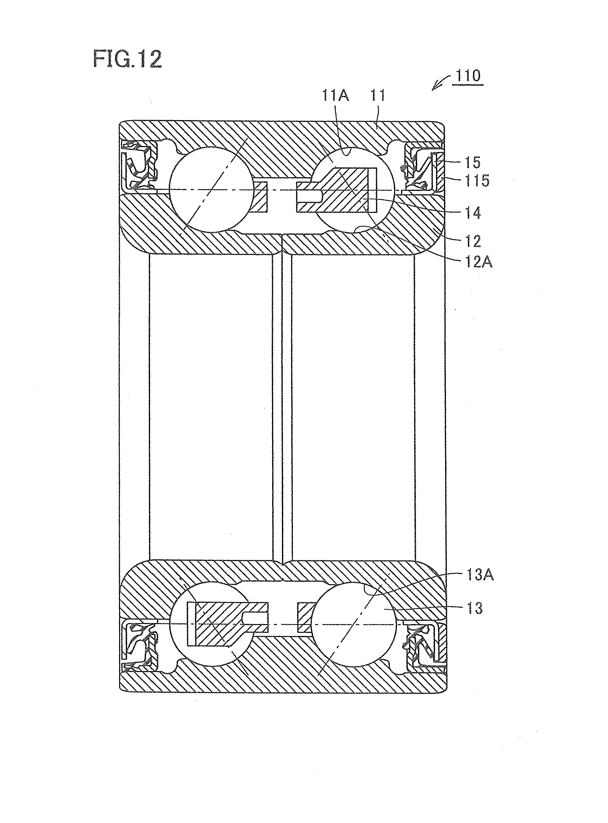

Referring to Figs. 11 and 12, a double row angular contact ball bearing 110 as a wheel rolling bearing supports a rotating-side member such as a hub wheel 113, which supports a wheel 120 (driving wheel) formed of a wheel 111 and a tire 112, to be rotatable relative to a fixed-side member such as a knuckle 114.

Double row angular contact ball bearing 110 mainly includes an outer ring 11, an inner ring 12, balls 13, a cage 14, sealing members 15, and a magnetic encoder 115. Inner ring 12 fits on the outer peripheral surface of hub wheel 113, and outer ring 11 fits on the inner peripheral surface of knuckle 114.

Outer ring 11 is formed of one member. Inner ring 12 is formed of two members. The plurality of balls 13 are arranged in double rows. The plurality of balls 13 come in contact with an outer ring raceway surface 11A and an inner ring raceway surface 12A at ball raceway surfaces 13A, and are circumferentially arranged at a prescribed pitch by comb-shaped cage 14 to be held on an annular raceway in a rollable manner. Thus, outer ring 11 and inner ring 12 are rotatable relative to each other.

Straight lines connecting contact points between balls 13 and outer ring 11 and contact points between balls 13 and inner ring 12 form angles relative to a radial direction (direction perpendicular to a rotation axis of double row angular contact ball bearing 110). When a load in the radial direction is applied, therefore, a component of force in an axial direction (direction of the rotation axis of double row angular contact ball bearing 110) is produced. Straight lines connecting contact points between ball 13 and outer ring 11 and contact points between adjacent ball 13 and inner ring 12 are arranged in opposite directions to cancel the component of force.

Sealing members 15 are inserted between the inner diameter of outer ring 11 and the outer diameter of inner ring 12. Sealing members 15 can prevent leakage of oil from inside of the double row angular contact ball bearing, or penetration of foreign objects and water from outside of the double row angular contact ball bearing.

Magnetic encoder 115 is press-fit into an outer diameter end portion of inner ring 12, and has a magnetic member, which is circumferentially multipolar magnetized in such state, closely confronting a magnetic sensor 116 fixed to knuckle 114. Thus, the rotational speed of the wheel can be accurately detected.

The operation of wheel 120 is now described. Wheel 120 rotates by rotation of the rotating-side member such as hub wheel 113 relative to the fixed-side member such as knuckle 114.

A method of manufacturing the wheel rolling bearing in one embodiment of the present invention is similar to the aforementioned method of manufacturing the motor rolling bearing except for the forming step. In the forming step, steel members formed into rough shapes of outer ring 11, inner ring 12 and balls 13 shown in Fig. 12 are prepared. The description of the remaining steps of the manufacturing method will not be repeated.

In the aforementioned one embodiment of the present invention, a motor rolling bearing, a machine tool main shaft rolling bearing, a wheel rolling bearing, a grease-sealed deep groove ball bearing, an angular contact ball bearing, a cylindrical roller bearing, a double row angular contact ball bearing, and raceway members and rolling elements included in these bearings have been described as examples. The rolling bearing and its bearing members of the present invention are not limited as such, but may be a rolling bearing and its raceway members and rolling elements. For example, the rolling bearing in another embodiment may be a radial bearing or a thrust bearing. The raceway members include an outer ring, an inner ring and the like. The rolling elements may form raceway surfaces between themselves and the inner ring, the outer ring and a raceway washer. The rolling elements include balls, cylindrical rollers, tapered rollers and the like.

Although the material for the outer ring, the inner ring as raceway members and the balls as rolling elements has been described as JIS standard SUJ2, 52100 (AISI or SAE standard), 100Cr6 (DIN standard), or GCr15 (GSB standard) which are materials corresponding to JIS standard SUJ2 can also be applied.

Another example of one embodiment of the present invention will be further described.

The rolling bearing in one embodiment of the present invention may be applied to an alternator rolling bearing. Next, an alternator rolling bearing will be described as another example of the rolling bearing in one embodiment of the present invention, and the structure of an alternator including this bearing will be described.

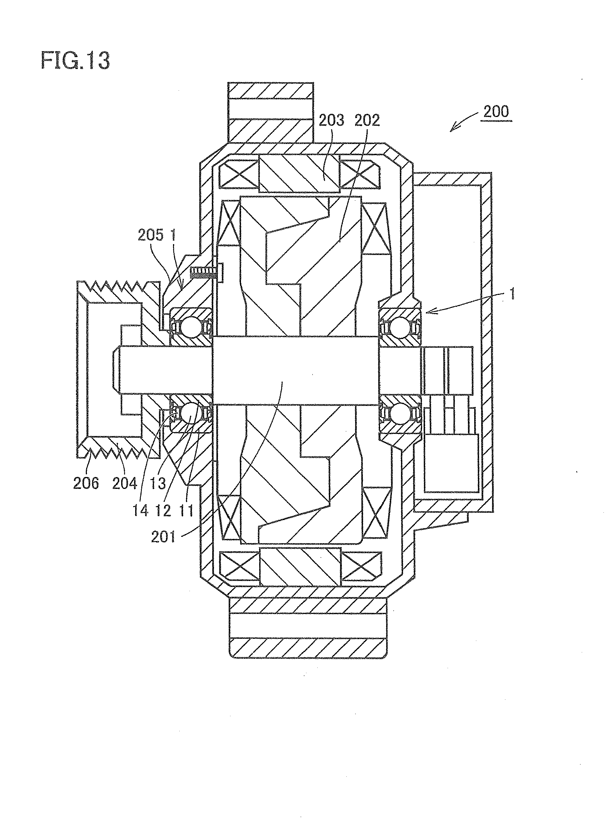

Referring to Fig. 13, an alternator 200 in one embodiment of the present invention includes a shaft (main shaft) 201, a rotor 202, a stator 203, a pulley 204, a housing 205, and a grease-sealed deep groove ball bearing 1 as an alternator rolling bearing.

Housing 205 is arranged to enclose rotor 202. Shaft 201 is arranged to pass through a central portion of rotor 202 and to pass through a wall surface of housing 205. Stator 203 is arranged to be opposed to the outer peripheral surface of rotor 202 in housing 205.

Housing 205 is arranged to be opposed to part of the outer peripheral surface of one end portion of shaft 201. Grease-sealed deep groove ball bearing 1 as an alternator rolling bearing is arranged between shaft 201 and housing 205. Grease-sealed deep groove ball bearing 1 supports shaft 201 to be rotatable relative to housing 205. Annular pulley 204 is attached, outside of housing 205, to a tip portion of the one end portion of shaft 201. The outer peripheral surface of pulley 204 is provided with an engagement groove 206 around which a not-shown transmission belt is provided.

This grease-sealed deep groove ball bearing 1 as an alternator rolling bearing has a structure similar to that of the aforementioned grease-sealed deep groove ball bearing 1 as a motor rolling bearing in one embodiment of the present invention.

Grease-sealed deep groove ball bearing 1 as an alternator rolling bearing is an automotive electrical and auxiliary component rolling bearing, for example. In alternator 200 operated with power generated by a power source such as a not-shown engine, grease-sealed deep groove ball bearing 1 supports shaft 201 rotationally driven by this power to be rotatable relative to adjacently arranged housing 205.

In general, grease-sealed deep groove ball bearing 1 arranged at one end portion of shaft 201 between rotor 202 and pulley 204 is referred to as a front bearing. Grease-sealed deep groove ball bearing 1 arranged at the other end portion of shaft 201 is referred to as a rear bearing. Hydrogen embrittlement flaking occurs more readily in grease-sealed deep groove ball bearing 1 as the front bearing which is subjected to large stress such a bending moment, than in grease-sealed deep groove ball bearing 1 as the rear bearing.

The operation of alternator 200 is now described. The not-shown transmission belt rotated by power from a power source such as a not-shown engine is provided around the outer peripheral surface of pulley 204 provided with engagement groove 206. When this transmission belt rotates, pulley 204 rotates, along with shaft 201 pivotally supported by grease-sealed deep groove ball bearings 1 relative to housing 205, around the axis of shaft 201. Rotor 202 rotates along with shaft 201 around the axis of shaft 201. At this time, rotor 202 rotates relative to stator 203 opposed to the outer peripheral surface of rotor 202 and arranged to be fixed to housing 205. Consequently, an electromotive force is generated in the coil of stator 203 due to electromagnetic induction between rotor 202 and stator 203.

A method of manufacturing this grease-sealed deep groove ball bearing 1 as an alternator rolling bearing is similar to the aforementioned method of manufacturing grease-sealed deep groove ball bearing 1 as a motor rolling bearing in one embodiment of the present invention.

In an alternator rolling bearing, premature flaking caused by hydrogen embrittlement readily occurs due to a slip between contact elements from rapid acceleration and deceleration. Premature flaking caused by hydrogen embrittlement may also occur due to the passage of an electric current. In addition, a belt for driving electrical and auxiliary components including an alternator has been serpentinized with the recent trend for space saving. The serpentinization as used herein refers to driving a plurality of auxiliary components with one belt. The serpentinization eliminates the need the provide a belt for each auxiliary component, thereby saving space. The serpentinization tends to increase an applied load and load variation, causing a slip to be induced more readily than before.

Grease-sealed deep groove ball bearing 1 as an alternator rolling bearing is used for rotation of the inner ring, thus increasing load rotation of part of outer ring 11. Accordingly, premature flaking caused by hydrogen embrittlement readily occurs in that part of outer ring 11. It is thus preferable to apply the bearing member in one embodiment of the present invention to outer ring 11.

Alternatively, the rolling bearing in one embodiment of the present invention may be applied to a pulley rolling bearing. Next, a pulley rolling bearing will be described as another example of the rolling bearing in one embodiment of the present invention, and the structure of a pulley including this bearing will be described.

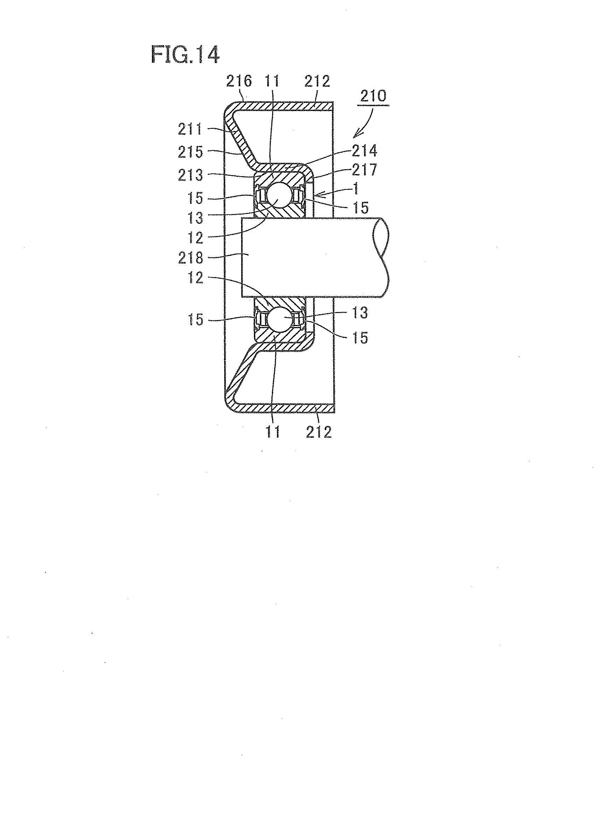

Referring to Fig. 14, a pulley 210 in one embodiment of the present invention includes a pulley body 211, and a grease-sealed deep groove ball bearing 1 as a pulley rolling bearing.

Pulley body 211 has an annular shape. The outer peripheral surface of pulley body 211 is provided with a transmission belt provision portion 212 around which a not-shown transmission belt is provided. A central portion on the inner diameter side of pulley body 211 is provided with a through hole 213 through which a shaft (main shaft) 218 passes. Grease-sealed deep groove ball bearing 1 is fitted into pulley body 211 such that the inner peripheral surface of through hole 213 is in contact with an outer ring 11 of grease-sealed deep groove ball bearing 1.

More specifically, pulley body 211 includes a cylindrical inner peripheral cylindrical portion 214 having an inner peripheral surface provided with the through hole, a flange portion 215 extending radially outward from one end portion in a width direction (axial direction) of inner peripheral cylindrical portion 214, an outer peripheral cylindrical portion 216 extending in the width direction (axial direction) from flange portion 215, and a rib portion 217 extending radially inward from the other end portion in the width direction (axial direction) of inner peripheral cylindrical portion 214. Outer ring 11 of grease-sealed deep groove ball bearing 1 is fitted to be in contact with inner peripheral cylindrical portion 214 and rib portion 217 of pulley body 211.

Shaft 218 is fitted and attached to an inner ring 12 of grease-sealed deep groove ball bearing 1.

This grease-sealed deep groove ball bearing 1 as a pulley rolling bearing has a structure similar to that of the aforementioned grease-sealed deep groove ball bearing 1 as a motor rolling bearing in one embodiment of the present invention.

Grease-sealed deep groove ball bearing 1 as a pulley rolling bearing is an automotive electrical and auxiliary component rolling bearing, for example. In pulley 210 operated with power generated by a power source such as a not-shown engine, grease-sealed deep groove ball bearing 1 supports pulley body 211 rotationally driven by this power to be rotatable relative to shaft 218 passing through pulley 210.

The operation of pulley 210 is now described. The not-shown transmission belt rotated by power from a power source such as a not-shown engine is provided around the outer peripheral surface of pulley body 211 provided with transmission belt provision portion 212. When this transmission belt rotates, pulley 210 rotates, along with shaft 218 pivotally supported by grease-sealed deep groove ball bearings 1, around the axis of shaft 218. Thus, pulley 210 can function as a tensioner for providing the transmission belt with tension when the distance is fixed between shafts around which the transmission belt is provided. Furthermore, pulley 210 can function as an idler for changing a traveling direction of the transmission belt in order to avoid contact with various devices that are obstacles in an engine room.

A method of manufacturing this grease-sealed deep groove ball bearing 1 as a pulley rolling bearing is similar to the method of manufacturing the aforementioned grease-sealed deep groove ball bearing 1 as a motor rolling bearing in one embodiment of the present invention.

In a pulley rolling bearing, premature flaking caused by hydrogen embrittlement may occur particularly due to a slip or the passage of an electric current. In addition, a belt for driving electrical and auxiliary components including a pulley has been serpentinized with the recent trend for space saving. The serpentinization tends to increase an applied load and load variation, causing a slip to be induced more readily than before.

Grease-sealed deep groove ball bearing 1 as a pulley rolling bearing is used for rotation of the outer ring, thus increasing load rotation of part of inner ring 12. Accordingly, premature flaking caused by hydrogen embrittlement readily occurs in that part of inner ring 12. It is thus preferable to apply the bearing member in one embodiment of the present invention to inner ring 12.

Alternatively, the rolling bearing in one embodiment of the present invention may be applied to a car air conditioner electromagnetic clutch pulley rolling bearing. Next, a car air conditioner electromagnetic clutch pulley rolling bearing will be described as another example of the rolling bearing in one embodiment of the present invention, and a compressor with a car air conditioner electromagnetic clutch pulley mechanism including this bearing will be described.

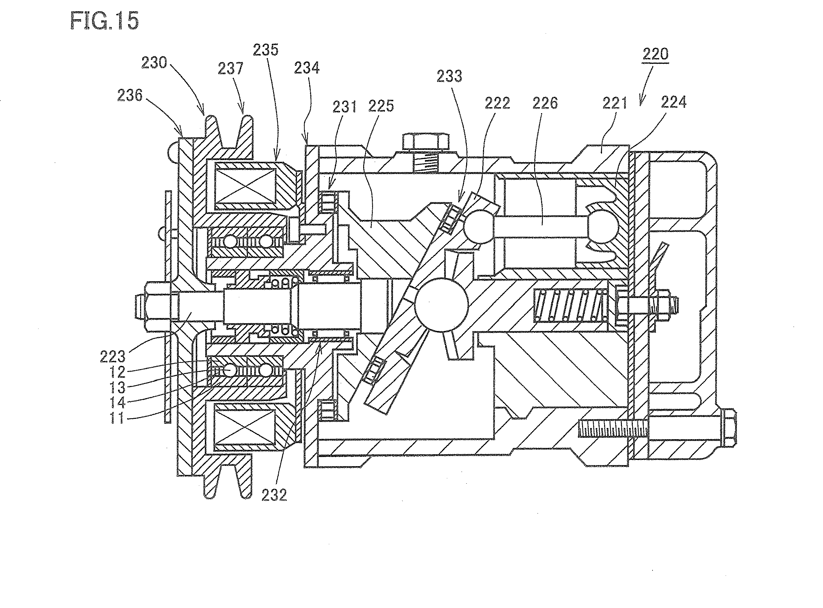

Referring to Fig. 15, this compressor includes a single swash plate-type swash plate compressor 220 and a compressor pulley mechanism 230.

Single swash plate-type swash plate compressor 220 is first described.

Single swash plate-type swash plate compressor 220 includes a housing 221, a pulley bearing support member 234, for example, fixedly screwed to housing 221, a main shaft 223, a rotating member 225 attached to main shaft 223, a swash plate 222 swinging according to rotation of rotating member 225, a piston rod 226 coupled to swash plate 222, and a piston 224 coupled to the opposite side of piston rod 226.

Between rotating member 225 and pulley bearing support member 234, a rotating member/pulley support member bearing 231 formed of a double row needle roller thrust bearing is arranged as a support structure for receiving a thrust load. Between swash plate 222 and rotating member 225, a swash plate support bearing 233 formed of a double row needle roller thrust bearing is arranged as a support structure for receiving a thrust load.

In compressor 220, rotating member 225 rotates according to rotation of main shaft 223, whereby swash plate 222 swings. This swing motion of swash plate 222 causes piston rod 2226 to reciprocate to allow piston 224 coupled to piston rod 226 to reciprocate in a cylinder.

Compressor pulley mechanism 230 is now described.

Pulley bearing support member 234 is fixedly screwed to housing 221 of compressor 220. Furthermore, a clutch electromagnet 235 is fixedly attached to pulley bearing support member 234. On the other hand, a power transmitting member 236 fits on the end of main shaft 223. A car air conditioner electromagnetic clutch pulley 237 fits on the outer periphery of grease-sealed deep groove ball bearing 1 as a pulley rolling bearing.

A main shaft support bearing 232 is arranged between main shaft 223 and pulley bearing support member 234. Furthermore, grease-sealed deep groove ball bearing 1 as a car air conditioner electromagnetic clutch pulley rolling bearing is arranged between the inner peripheral surface of car air conditioner electromagnetic clutch pulley 237 and pulley bearing support member 234.

This grease-sealed deep groove ball bearing 1 as a car air conditioner electromagnetic clutch pulley rolling bearing has a structure similar to that of the aforementioned grease-sealed deep groove ball bearing 1 as a motor rolling bearing in one embodiment of the present invention.

In pulley mechanism 230, by exciting or not exciting clutch electromagnet 235, a rotary driving force of car air conditioner electromagnetic clutch pulley 237 rotated by a not-shown driving force is transmitted to main shaft 223 to operate the compressor, or the rotary driving force of car air conditioner electromagnetic clutch pulley 237 is not transmitted to main shaft 223 to terminate the operation of the compressor.

A compressor bearing is now described.

A compressor bearing is broadly divided into a compressor bearing for use in compressor 220 and a compressor bearing for use in pulley mechanism 230.

The compressor bearing for use in compressor 220 includes swash plate support bearing 233 rotatably supporting swash plate 222 and rotating member 225, and rotating member/pulley support member bearing 231 rotatably supporting rotating member 225 and pulley bearing support member 234.

The compressor bearing for use in pulley mechanism 230 includes main shaft support bearing 232 rotatably supporting main shaft 223 and pulley bearing support member 234, and grease-sealed deep groove ball bearing 1 as a car air conditioner electromagnetic clutch pulley rolling bearing rotatably supporting car air conditioner electromagnetic clutch pulley 237 and pulley bearing support member 234.

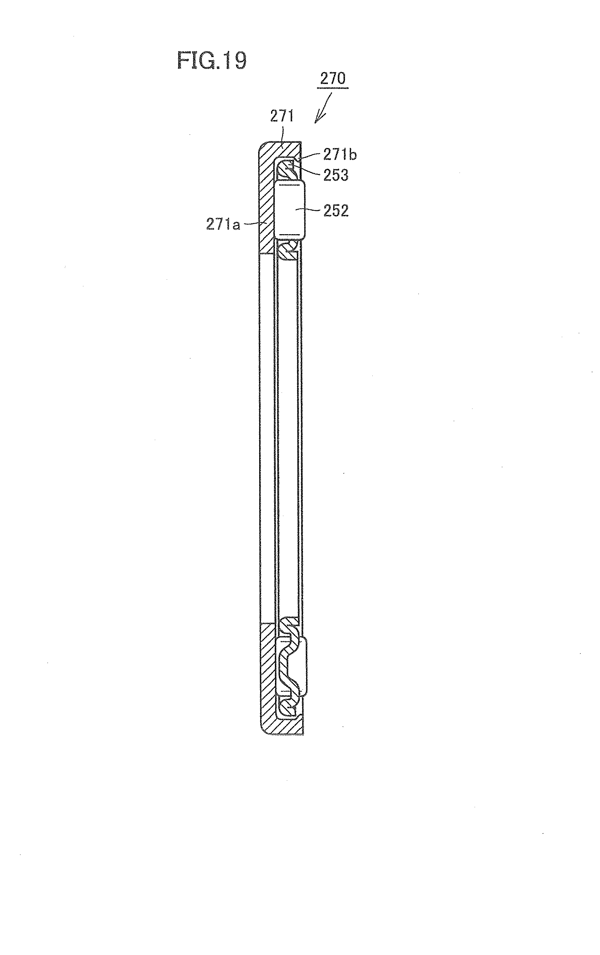

A needle roller thrust bearing is used for rotating member/pulley support member bearing 231 and swash plate support bearing 233. As this needle roller thrust bearing, a needle roller thrust bearing 270 shown in Fig. 19 which will be described later may be used. A needle roller bearing or a cylindrical roller bearing is used for main shaft support bearing 232. As this cylindrical roller bearing, a cylindrical roller bearing 20 shown in Fig. 8 may be used. The grease-sealed deep groove ball bearing shown in Fig. 2 is used for grease-sealed deep groove ball bearing 1 as a car air conditioner electromagnetic clutch pulley rolling bearing. A double row angular contact ball bearing may be used for the car air conditioner electromagnetic clutch pulley rolling bearing. As the double row angular contact ball bearing, double row angular contact ball bearing 110 shown in Fig. 12 may be used.

The compressor bearing for use in compressor 220 employs a needle roller thrust bearing having a large roller diameter in order to endure impact from piston 224. The needle roller thrust bearing is structured such that needle rollers are in line contact with a raceway surface. On the raceway surface in rolling line contact with the needle rollers, the larger the distance from the rotation center of the bearing toward the outer diameter, the higher the peripheral speed.

The needle roller thrust bearing as a compressor bearing for use in compressor 220 does not have a raceway washer as with a normal bearing, and therefore a plurality of needle rollers are held by a cage and rotate in line contact with the raceway surface. In swash plate support bearing 233, each of swash plate 222 and rotating member 225 serves as a member having a raceway surface. In rotating member/pulley support member bearing 231, each of rotating member 225 and pulley bearing support member 234 serves as a member having a raceway surface.

A method of manufacturing this grease-sealed deep groove ball bearing 1 as a car air conditioner electromagnetic clutch pulley rolling bearing is similar to the method of manufacturing the aforementioned grease-sealed deep groove ball bearing 1 as a motor rolling bearing in one embodiment of the present invention.

In a car air conditioner electromagnetic clutch pulley rolling bearing, premature flaking caused by hydrogen embrittlement may occur particularly due to a slip. In addition, a belt for driving electrical and auxiliary components including a car air conditioner has been serpentinized with the recent trend for space saving. The serpentinization tends to increase an applied load and load variation, causing a slip to be induced more readily than before.

Grease-sealed deep groove ball bearing 1 as a car air conditioner electromagnetic clutch pulley rolling bearing is used for rotation of the outer ring, thus increasing load rotation of part of inner ring 12. Accordingly, premature flaking caused by hydrogen embrittlement readily occurs in that part of inner ring 12. It is thus preferable to apply the bearing member in one embodiment of the present invention to inner ring 12.

Alternatively, the rolling bearing in one embodiment of the present invention may be applied to a continuously variable transmission rolling bearing. Next, a continuously variable transmission rolling bearing will be described as another example of the rolling bearing in one embodiment of the present invention, and the structure of a continuously variable transmission including this bearing will be described.

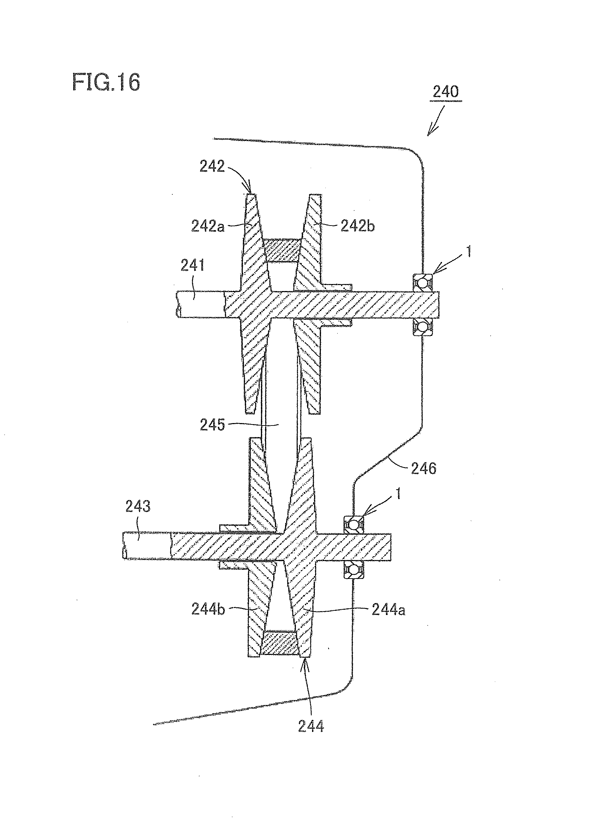

Referring to Fig. 16, as one example of a continuously variable transmission in one embodiment of the present invention, a belt type continuously variable transmission 240 will be described. Belt type continuously variable transmission 240 mainly includes a primary pulley shaft (pulley shaft) 241, a primary pulley 242, a secondary pulley shaft 243, a secondary pulley (pulley shaft) 244, an endless belt 245, a casing (housing) 246, and grease-sealed deep groove ball bearing 1 as a continuously variable transmission rolling bearing.

Primary pulley shaft 241 is provided with primary pulley 242. Primary pulley 242 includes a primary pulley fixed sheave 242a and a primary pulley movable sheave 242b. Primary pulley fixed sheave 242a is formed integrally with primary pulley shaft 241. Primary pulley shaft 241 passes through primary pulley movable sheave 242b, which is structured to be slidable in the direction of the axis of primary pulley shaft 241. Primary pulley shaft 241 has one end connected to a not-shown clutch. Primary pulley shaft 241 has the other end rotatably supported by grease-sealed deep groove ball bearing 1 as a continuously variable transmission rolling bearing fixed to casing 246.

Secondary pulley shaft 243 is provided with secondary pulley 244. Secondary pulley 244 includes a secondary pulley fixed sheave 244a and a secondary pulley movable sheave 244b. Secondary pulley fixed sheave 244a is formed integrally with secondary pulley shaft 243. Secondary pulley shaft 243 passes through secondary pulley movable sheave 244b, which is structured to be slidable in the direction of the axis of secondary pulley shaft 243. Secondary pulley shaft 243 has one end, to which a gear of a not-shown gear mechanism is attached, supported by another bearing. Secondary pulley shaft 243 has the other end rotatably supported by grease-sealed deep groove ball bearing 1 as a continuously variable transmission rolling bearing fixed to casing 246.

V-shaped endless belt 245 is extended between primary pulley 242 and secondary pulley 244. Primary pulley 242 is structured such that the length between primary pulley fixed sheave 242a and primary pulley movable sheave 242b (primary pulley width) can be varied by sliding of primary pulley movable sheave 242b.

Secondary pulley 244 is structured such that the length between secondary pulley fixed sheave 244a and secondary pulley movable sheave 244b (secondary pulley width) can be varied by sliding of secondary pulley movable sheave 244b. Primary pulley 242 and secondary pulley 244 are structured such that their respective positions in a radial direction in which endless belt 245 is extended are varied by variations in the primary pulley width and the secondary pulley width.

The operation of belt type continuously variable transmission 240 is now described. A driving force is transmitted to primary pulley shaft 241 from a not-shown engine through a clutch. The respective portions in the radial direction in which endless belt 245 is extended are varied by variations in the primary pulley width and the secondary pulley width. Thus, the driving force of primary pulley shaft 241 is continuously variably transmitted to secondary pulley shaft 243. The driving force is transmitted from secondary pulley shaft 243 to an axle through the gear mechanism and a differential gear. Continuously variable transmission is thus achieved.

A method of manufacturing this grease-sealed deep groove ball bearing 1 as a continuously variable transmission rolling bearing is similar to the method of manufacturing the aforementioned grease-sealed deep groove ball bearing 1 as a motor rolling bearing in one embodiment of the present invention.

In a continuously variable transmission rolling bearing, it is important to reduce a bearing backlash (axial clearance) in order to ensure rotation accuracy of a pulley unit. Conventionally, a method of reducing the axial clearance of a bearing by setting a small curvature of groove of inner and outer rings of the bearing has been employed. Setting a small curvature of groove of inner and outer rings of the bearing, however, increases a differential slip during bearing operation, thus raising the possibility of premature flaking caused by hydrogen embrittlement.

Grease-sealed deep groove ball bearing 1 as a continuously variable transmission rolling bearing is used for rotation of the inner ring, thus increasing load rotation of part of outer ring 11. Accordingly, premature flaking caused by hydrogen embrittlement readily occurs in that part of outer ring 11. It is thus preferable to apply the bearing member in one embodiment of the present invention to outer ring 11.

Alternatively, the rolling bearing in one embodiment of the present invention may be applied to a needle roller bearing. When the needle roller bearing is used under a condition in which a slip occurs such as rapid acceleration and deceleration, hydrogen is produced by the separation of lubricant and may enter steel to cause premature flaking. For the purpose of size reduction and energy saving, needle roller bearings will be operated under increasingly severe conditions in the future. It is thus expected that needle roller bearings highly resistant to hydrogen embrittlement will be required.

A shell type needle roller bearing will be described as one example of the needle roller bearing which is another example of the rolling bearing in one embodiment of the present invention.

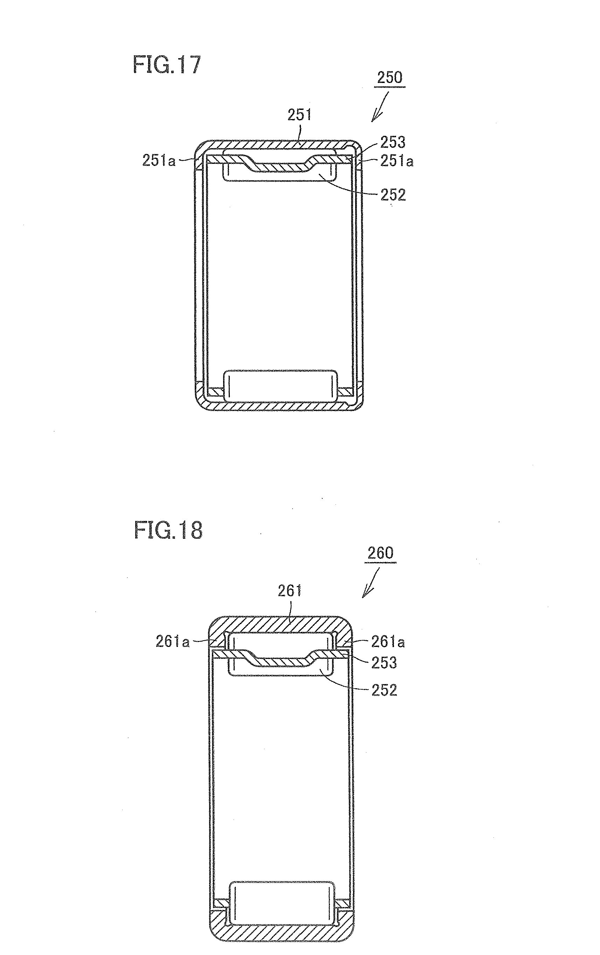

Referring to Fig. 17, a shell type needle roller bearing 250 includes a shell outer ring 251 as a raceway member, needle rollers 252 as a plurality of rolling elements, and a cage 253. Shell outer ring 251 has a raceway surface on its inner diameter surface. Shell outer ring 251 includes a rib portion 251a projecting radially inward, at each of opposing end portions in an axial direction. Needle rollers 252 are arranged along the raceway surface. Cage 253 is structured to retain a space between needle rollers 252 adjacent to each other. Cage 253 is arranged on the inner side of rib portions 251a of shell outer ring 251 in an axial direction. Shell outer ring 251 may have an open-end shape or a closed-end shape.

A method of manufacturing shell type needle roller bearing 250 in one embodiment of the present invention is similar to the method of manufacturing the aforementioned motor rolling bearing in one embodiment of the present invention except for the forming step. In the forming step, steel members formed into rough shapes of shell outer ring 251, needle rollers 252 and cage 253 shown in Fig. 17 are prepared. The description of the remaining steps of the manufacturing method will not be repeated.

When the shell type needle roller bearing is used particularly to support an air compressor of a vehicle rapidly accelerated and decelerated by switching of an electromagnetic clutch, when used to support an ABS pump rapidly accelerated during startup, or when used at a big end of a con rod of a versatile engine, a slip occurs readily in rolling elements, which may cause premature flaking caused by hydrogen embrittlement.

A solid type needle roller bearing will be described as one example of the needle roller bearing which is another example of the rolling bearing in one embodiment of the present invention.

Referring to Fig. 18, a solid type needle roller bearing 260 includes an outer ring 261 as a raceway member, needle rollers 252 as a plurality of rolling elements, and a cage 253. Outer ring 261 is formed to have a large thickness, and includes a rib portion 261a projecting radially inward, at each of opposing end portions in an axial direction. Cage 253 is arranged on the inner side of rib portions 261a of outer ring 261 in a radial direction.

A method of manufacturing solid type needle roller bearing 260 in one embodiment of the present invention is similar to the method of manufacturing the aforementioned motor rolling bearing in one embodiment of the present invention except for the forming step. In the forming step, steel members formed into rough shapes of outer ring 261, needle rollers 252 and cage 253 shown in Fig. 18 are prepared. The description of the remaining steps of the manufacturing method will not be repeated.

When the solid type needle roller bearing is used particularly to support an air compressor of a vehicle rapidly accelerated and decelerated by switching of an electromagnetic clutch, when used to support a transmission rapidly accelerated during startup, or when used at a big end of a con rod of a versatile engine, a slip occurs readily between contact elements, which may cause premature flaking caused by hydrogen embrittlement.

A needle roller thrust bearing will be described as one example of the needle roller bearing which is another example of the rolling bearing in one embodiment of the present invention.

Referring to Fig. 19, a needle roller thrust bearing 270 includes a raceway washer 271 as a raceway member, needle rollers 252 as a plurality of rolling elements, and a cage 253. A raceway washer outer diameter portion 271a on which needle rollers 252 roll is formed on the outer diameter side of raceway washer 271. A raceway washer projecting portion 271b projecting radially inward is formed at a tip portion of raceway washer 271. By arranging a tip portion of cage 253 on the inner side of raceway washer projecting portion 271b in an axial direction, needle roller thrust bearing 270 is structured to prevent needle rollers 252 and cage 253 from being separated from raceway washer 271. Needle rollers 252 are radially arranged along the raceway surface. Cage 253 is structured to circumferentially retain a space between needle rollers 252 adjacent to each other.

A method of manufacturing needle roller thrust bearing 270 in one embodiment of the present invention is similar to the method of manufacturing the aforementioned motor rolling bearing in one embodiment of the present invention except for the forming step. In the forming step, steel members formed into rough shapes of raceway washer 271, needle rollers 252 and cage 253 shown in Fig. 19 are prepared. The description of the remaining steps of the manufacturing method will not be repeated.

In the needle roller thrust bearing, a slip occurs constantly between rolling elements and rolling rings during operation due to the difference in peripheral speed between the inner and outer sides of the rolling elements, which may cause premature flaking caused by hydrogen embrittlement.

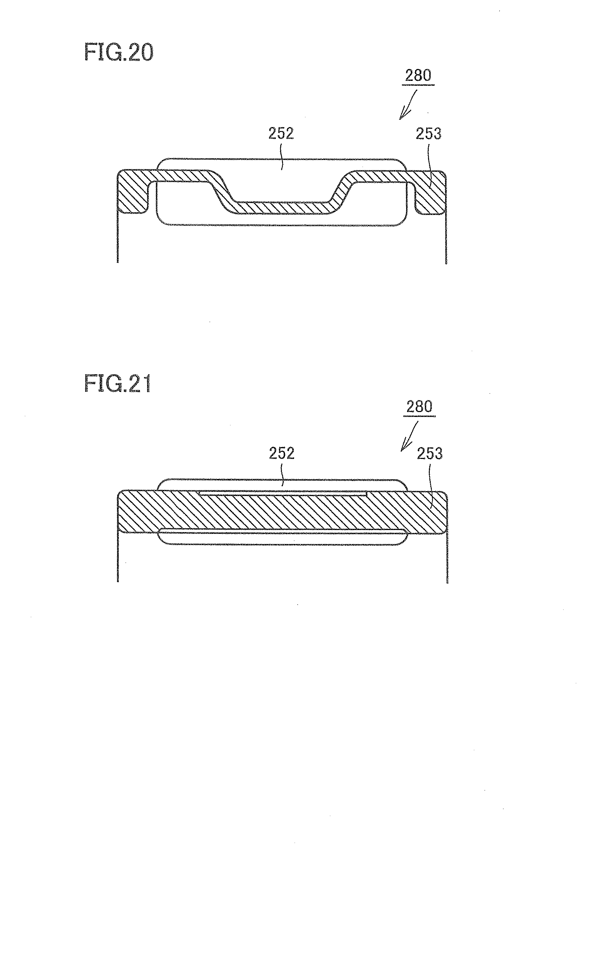

Alternatively, the needle roller bearing in one embodiment of the present invention may be a needle roller bearing with a cage. Referring to Fig. 20, cage 253 of a needle roller bearing 280 with a cage may be made of a metal material. Cage 253 made of a metal material has high strength. Referring to Fig. 21, cage 253 of needle roller bearing 280 with a cage maybe made of a polymeric material. Cage 253 made of a polymeric material has a high degree of freedom in shape and can be readily incorporated.

When the needle roller bearing with a cage is used particularly as an idler bearing of a transmission of a vehicle rapidly accelerated during startup, when used as a planetary pinion support bearing of a CVT, or when used as a big end bearing of a con rod of a two-wheel engine or a versatile engine, a slip occurs readily in rolling elements, which may cause premature flaking caused by hydrogen embrittlement.

Although at least one bearing member of the raceway members and the rolling elements has been described as being made of JIS standard SUJ2 in the above description, at least one bearing member of the raceway members and the rolling elements may be made of JIS standard SUJ3 in the present invention. Next, a case will be described where at least one of the raceway members and the rolling elements is made of JIS standard SUJ3. Unless otherwise specified, the structure is similar to the aforementioned one except for the at least one bearing member of the raceway members and the rolling elements being made of JIS standard SUJ3.

In another rolling bearing in one embodiment of the present invention, at least one bearing member of outer ring 11, inner ring 12 as raceway members and balls 13 as rolling elements is made of JIS standard SUJ3. The at least one bearing member of outer ring 11, inner ring 12 as raceway members and balls 13 as rolling elements has been quenched. The at least one bearing member of outer ring 11, inner ring 12 as raceway members and balls 13 as rolling elements has a nitrided raceway surface 11A, 12A, 13A. A nitrided region NR is formed inward from the surfaces of outer ring 11, inner ring 12 and balls 13 as rolling elements. Although nitrided region NR is not illustrated in the following drawings, it is similarly formed inward from the surfaces of outer ring 11, inner ring 12 and balls 13 as rolling elements.

When a standard rolling bearing steel ball made of SUJ2 and having a diameter of 19.05 mm is pressed against the at least one bearing member of outer ring 11, inner ring 12 as raceway members and balls 13 as rolling elements at a load of 3.18 kN and held for 10 seconds before the load is removed, a dent is formed in the bearing member at a depth of not more than 0.1 µm. The raceway surface of the bearing member has a Rockwell C scale hardness of not less than HRC 60.5 and not more than HRC 62.1.

Raceway surface 11A, 12A, 13A of the at least one bearing member of outer ring 11, inner ring 12 as raceway members and balls 13 as rolling elements has a surface-nitrided concentration of not less than 0.05% by mass and not more than 0.4% by mass.

Nitrided JIS standard SUJ2 may be selected for balls 13 as rolling elements. In this case, balls 13 have been quenched. Each ball 13 has nitrided raceway surface 13A. When a standard rolling bearing steel ball made of SUJ2 and having a diameter of 19.05 mm is pressed against balls 13 at a load of 3.18 kN and held for 10 seconds before the load is removed, a dent is formed in balls 13 at a depth of not more than 0.2 µm. Raceway surfaces 13A of balls 13 as rolling elements have a Rockwell C scale hardness of not less than HRC 61.2 and not more than HRC 63.3.

Raceway surfaces 13A of balls 13 as rolling elements have a surface-nitrided concentration of not less than 0.05% by mass and not more than 0.4% by mass.

Non-nitrided JIS standard SUJ2 may be selected for balls 13 as rolling elements. In this case, when a standard rolling bearing steel ball made of SUJ2 and having a diameter of 19.05 mm is pressed against balls 13 at a load of 1.97 kN and held for 10 seconds before the load is removed, a dent is formed in the bearing members at a depth of not more than 0.2 µm.

The entire rolling elements have a Rockwell C scale hardness of not less than HRC 57.0 and not more than HRC 58.9.

In the another rolling bearing in one embodiment of the present invention, similarly to the aforementioned case where at least one bearing member of the raceway members and the rolling elements is made of JIS standard SUJ2, it is preferable that balls 13 as rolling elements be made of a material containing ceramic. Silicon nitride, sialon or the like may be adopted as the ceramic.

In the another rolling bearing in one embodiment of the present invention, similarly to the aforementioned case, it is preferable that cage 14 for holding balls 13 as rolling elements be made of a material containing metal.

A method of manufacturing a motor rolling bearing in which at least one bearing member of raceway members and rolling elements is made of JIS standard SUJ3 will now be described.

In the method of manufacturing the another rolling bearing in one embodiment of the present invention, referring to Fig. 4, first, in a step (S100), a steel material preparing step of preparing a steel material made of JIS standard SUJ3 is performed. Specifically, for example, steel bars and steel wires made of JIS standard SUJ3 are prepared.

Next, in a step (S200), a forming step of preparing steel members formed into rough shapes of the bearing members of the motor rolling bearing is performed by forming the aforementioned steel material. Specifically, steel members formed into rough shapes of outer ring 11, inner ring 12 and balls 13 shown in Figs. 2 and 3 are prepared by performing working such as forging and machining on the aforementioned steel bars and steel wires. The aforementioned steps (S100) and (S200) constitute a steel member preparing step of preparing the steel members formed into rough shapes of the bearing members of the motor rolling bearing.

Next, in a step (S300), a quench hardening step of quench hardening the steel members is performed by cooling the steel members from a temperature of not less than a point A1 to a temperature of not more than a point MS. Next, in a step (S400), a tempering step of tempering the quench hardened steel members is performed by heating the steel members to a temperature range of not less than 280°C and not more than 320°C. The aforementioned steps (S300) and (S400) constitute a heat treatment step of heat-treating the steel members. The details of this heat treatment step will be described later.

Next, in a step (S500), a finishing step is performed. Specifically, finishing such as grinding is performed on the steel members subjected to the heat treatment step, whereby outer ring 11, inner ring 12 and balls 13 are finished. Thus, the method of manufacturing the bearing members of the motor rolling bearing in one embodiment of the present invention is completed, and outer ring 11, inner ring 12 and balls 13 as the bearing members of the motor rolling bearing are completed.

Further, in a step (S600), an assembling step is performed. Specifically, outer ring 11, inner ring 12 and balls 13 prepared in the steps (S100) to (S500) are combined with separately prepared cage 14 and the like and assembled into grease-sealed deep groove ball bearing 1 as a motor rolling bearing in one embodiment of the present invention. Thus, the method of manufacturing the motor rolling bearing in one embodiment of the present invention is completed, and grease-sealed deep groove ball bearing 1 as a motor rolling bearing is completed.

The details of the heat treatment step are now described. In Fig. 5, the transverse direction shows time, and indicates that the time elapses rightward. In Fig. 5, the vertical direction shows temperature, and indicates that the temperature increases upward.

Referring to Fig. 5, the steel members prepared in the step (S200) are first heated to a temperature T1 of not less than point A1, and held for a time t1. At this time, the steel members are heated in an atmosphere of RX gas with ammonia gas introduced therein, for example. Thus, the surfaces of the steel members to serve as the raceway surfaces of the bearing members are nitrided. Then, the steel members are dipped into oil (oil cooling), for example, to be cooled from the temperature of not less than point A1 to the temperature of not more than point MS. Thus, quenching is completed. The quench hardening step is completed through the aforementioned steps.

Then, the tempering step is performed by heating the quench hardened steel members to a temperature T2 of not more than point A1, holding the steel members for t2 and then air-cooling (standing to cool) the steel members to room temperature, for example. The heat treatment step in one embodiment of the present invention is completed through the aforementioned steps.

Temperature T1 is a temperature of 850°C, for example. Time T1 is 180 minutes, for example.

Temperature T2 is a temperature of not less than 280°C and not more than 320°C, for example. Time t2 is 120 minutes, for example.

According to the aforementioned method of manufacturing the bearing members of the motor rolling bearing in one embodiment of the present invention, in the steel member preparing step, steel members made of JIS standard SUJ3 are prepared in view of material cost. Then, in the quench hardening step, quenching is performed as nitriding at a temperature of 850°C in an atmosphere of RX gas with ammonia gas introduced therein. Then, in the tempering step, tempering is performed by heating the steel members to not less than 280°C and not more than 320°C. Consequently, according to the aforementioned method of manufacturing the bearing members of the motor rolling bearing in one embodiment of the present invention, the plastic deformation resistance of the steel constituting the bearing members of the motor rolling bearing and resistance to production of atomic vacancy in the steel can be increased.

In a method of manufacturing another rolling bearing in one embodiment of the present invention, the rolling elements may be made of JIS standard SUJ2 in view of material cost and availability. A method of manufacturing a motor rolling bearing including rolling elements made of nitrided JIS standard SUJ2 is similar to the aforementioned manufacturing method in which the bearing member is made of JIS standard SUJ2, and therefore the description thereof will not be repeated.

In a method of manufacturing another rolling bearing in one embodiment of the present invention, the rolling elements may be made of non-nitrided JIS standard SUJ2 in view of productivity. A method of manufacturing a motor rolling bearing including rolling elements made of non-nitrided JIS standard SUJ2 is similar to the aforementioned manufacturing method in which the bearing member is made of non-nitrided JIS standard SUJ2, and therefore the description thereof will not be repeated.

The aforementioned another rolling bearing in one embodiment of the present invention can be applied similarly to the aforementioned case where JIS standard SUJ2 is employed, as a motor rolling bearing (Fig. 2), a machine tool main shaft rolling bearing (Fig. 6), a wheel rolling bearing (Fig. 11), an alternator rolling bearing (Fig. 13), a pulley rolling bearing (Fig. 14), a car air conditioner electromagnetic clutch pulley rolling bearing (Fig. 15), a continuously variable transmission rolling bearing (Fig. 16), a shell type needle roller bearing (Fig. 17), a solid type needle roller bearing (Fig. 18), a needle roller thrust bearing (Fig. 19) and a needle roller bearing with a cage (Figs. 20, 21).

The function and effect in one embodiment of the present invention will now be described.

One rolling bearing in one embodiment of the present invention includes outer ring 11, inner ring 12 as raceway members having an annular raceway, and balls 13 as a plurality of rolling elements being in contact with outer ring 11, inner ring 12 as raceway members and arranged on the annular raceway in a rollable manner. At least one bearing member of outer ring 11, inner ring 12 as raceway members and balls 13, cylindrical rollers 14 as rolling elements is made of JIS standard SUJ2.

According to the one rolling bearing in one embodiment of the present invention, the at least one bearing member of outer ring 11, inner ring 12 as raceway members and balls 13 as rolling elements has been quenched. The at least one bearing member of outer ring 11, inner ring 12 as raceway members and balls 13 as rolling elements has nitrided raceway surface 11A, 12A, 13A. Nitriding raceway surface 11A, 12A, 13A of the bearing member increases the plastic deformation resistance of the bearing member. Nitriding raceway surface 11A, 12A, 13A of the bearing member increases the plastic deformation resistance of the bearing member, thereby improving the hydrogen embrittlement resistance of the bearing member.

According to the one rolling bearing in one embodiment of the present invention, when a standard rolling bearing steel ball made of SUJ2 and having a diameter of 19.05 mm is pressed against the at least one bearing member of outer ring 11, inner ring 12 as raceway members and balls 13 as rolling elements at a load of 3.18 kN and held for 10 seconds before the load is removed, a dent is formed in the bearing member at a depth of not more than 0.2 µm. As one measure, it can be said that the plastic deformation resistance is high when a dent depth is not more than 0.2 µm. After studying relation between the tempering temperature and the dent depth in detail, it was found that, if tempering is performed at not less than 240°C and not more than 300°C, when a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.2 µm.

According to the one rolling bearing in one embodiment of the present invention, the raceway surface of the at least one bearing member of outer ring 11, inner ring 12 as raceway members and balls 13 as rolling elements has a Rockwell C scale hardness of not less than HRC 61.2 and not more than HRC 63.3. It was found that the raceway surface of the bearing member has a Rockwell C scale hardness of not less than HRC 61.2 and not more than HRC 63.3 when the tempering temperature is within a range of not less than 240°C and not more than 300°C.

Therefore, by tempering the bearing member having nitrided raceway surface 11A, 12A, 13A at a tempering temperature of not less than 240°C and not more than 300°C, the plastic deformation resistance and resistance to production of atomic vacancy can be increased. Thus, the hydrogen embrittlement resistance can be improved to suppress premature flaking caused by hydrogen embrittlement.

According to the one rolling bearing in one embodiment of the present invention, raceway surface 11A, 12A, 13A has a surface-nitrided concentration of not less than 0.05% by mass and not more than 0.4% by mass.

If raceway surface 11A, 12A, 13A has a surface-nitrided concentration of less than 0.05% by mass, a sufficient effect of extended life by the nitriding cannot be obtained. If raceway surface 11A, 12A, 13A has a surface-nitrided concentration of more than 0.4% by mass, a large amount of Cr carbonitrides is produced, resulting in lack of the amount of Cr contributing to hardenability. Thus, sufficient hardenability cannot be ensured. By setting the surface-nitrided concentration of raceway surface 11A, 12A, 13A to not less than 0.05% by mass and not more than 0.4% by mass, a sufficient effect of extended life by the nitriding can be obtained, to ensure sufficient hardenability.

According to the one rolling bearing in one embodiment of the present invention, balls 13 as rolling elements may be non-nitrided JIS standard SUJ2. In this case, when a standard rolling bearing steel ball made of SUJ2 and having a diameter of 19.05 mm is pressed against balls 13 at a load of 1.97 kN and held for 10 seconds before the load is removed, a dent is formed in balls 13 at a depth of not more than 0.2 µm. As one measure, it can be said that the plastic deformation resistance is high when a dent depth is not more than 0.2 µm. After studying relation between the tempering temperature and the dent depth in detail, it was found that, if tempering is performed at not less than 240°C and not more than 280°C, when a standard rolling bearing steel ball made of SUJ2 and having a diameter of 19.05 mm is pressed against the bearing member at a load of 1.97 kN and held for 10 seconds before the load is removed, a dent is formed in balls 13 at a depth of not more than 0.2 µm.

Therefore, by tempering balls 13 not having nitrided raceway surfaces 13A at a tempering temperature of not less than 240°C and not more than 280°C, the plastic deformation resistance and resistance to production of atomic vacancy can be increased. Thus, the hydrogen embrittlement resistance can be improved to suppress premature flaking caused by hydrogen embrittlement.

According to the aforementioned one rolling bearing in one embodiment of the present invention, the entire rolling elements may have a Rockwell C scale hardness of not less than HRC 57.0 and not more than HRC 58.9. The entire rolling elements have a Rockwell C scale hardness of not less than HRC 57.0 and not more than HRC 58.9 when the tempering temperature is within a range of not less than 240°C and not more than 280°C.

According to the one rolling bearing in one embodiment of the present invention, the rolling elements may be made of a material containing ceramic. Thus, the rolling elements are made of a material containing ceramic that does not exhibit hydrogen embrittlement. Thus, the hydrogen embrittlement resistance can be improved to suppress premature flaking caused by hydrogen embrittlement.

The one rolling bearing in one embodiment of the present invention may further include a cage for holding the rolling elements, the cage being made of a material containing metal. Under a condition in which an electric current is passed, premature flaking caused by hydrogen embrittlement is less likely to occur with a metal cage than with a resin cage. Therefore, premature flaking caused by hydrogen embrittlement can be suppressed.

The method of manufacturing the one rolling bearing in one embodiment of the present invention including outer ring 11, inner ring 12 as raceway members having an annular raceway, and balls 13 as a plurality of rolling elements being in contact with outer ring 11, inner ring 12 as raceway members and arranged on the annular raceway in a rollable manner, includes the following steps. At least one bearing member of outer ring 11, inner ring 12 as raceway members and balls 13 as rolling elements which is made of a material of JIS standard SUJ2 is prepared. Raceway surface 11A, 12A, 13A of the bearing member is nitrided and quenched. The quenched bearing member is tempered at not less than 240°C and not more than 300°C.

Nitriding and quenching raceway surface 11A, 12A, 13A of the bearing member increases the plastic deformation resistance of outer ring 11, inner ring 12 and balls 13 as the rolling member. Nitriding raceway surface 11A, 12A, 13A of the bearing member increases the plastic deformation resistance of the bearing member, thereby improving the hydrogen embrittlement resistance of the bearing member.

By tempering the quenched bearing member at not less than 240°C and not more than 300°C, the plastic deformation resistance of the bearing member and resistance to production of atomic vacancy in the bearing member can be increased. Thus, the hydrogen embrittlement resistance can be improved to suppress premature flaking caused by hydrogen embrittlement.

According to the method of manufacturing the one rolling bearing in one embodiment of the present invention, the nitriding is performed at a temperature of 850°C in an atmosphere of RX gas with ammonia gas introduced therein. As such, nitriding raceway surface 11A, 12A, 13A of the bearing member to a sufficient degree increases the plastic deformation resistance of the bearing member, thereby improving the hydrogen embrittlement resistance of the bearing member.

Next, a case will be described where at least one bearing member of the raceway members and the rolling elements is made of JIS standard SUJ3.

Another rolling bearing in one embodiment of the present invention includes outer ring 11, inner ring 12 as raceway members having an annular raceway, and balls 13 as a plurality of rolling elements being in contact with outer ring 11, inner ring 12 as raceway members and arranged on the annular raceway in a rollable manner. At least one bearing member of outer ring 11, inner ring 12 as raceway members and balls 13, cylindrical rollers 14 as rolling elements is made of JIS standard SUJ3.

According to the another rolling bearing in one embodiment of the present invention, the at least one bearing member of outer ring 11, inner ring 12 as raceway members and balls 13 as rolling elements has been quenched. The at least one bearing member of outer ring 11, inner ring 12 as raceway members and balls 13 as rolling elements has nitrided raceway surface 11A, 12A, 13A. Nitriding raceway surface 11A, 12A, 13A of the bearing member increases the plastic deformation resistance of the bearing member. Nitriding raceway surface 11A, 12A, 13A of the bearing member increases the plastic deformation resistance of the bearing member, thereby improving the hydrogen embrittlement resistance of the bearing member.

According to the another rolling bearing in one embodiment of the present invention, when a standard rolling bearing steel ball made of SUJ2 and having a diameter of 19.05 mm is pressed against the at least one bearing member of outer ring 11, inner ring 12 as raceway members and balls 13 as rolling elements at a load of 3.18 kN and held for 10 seconds before the load is removed, a dent is formed in the bearing member at a depth of not more than 0.1 µm As one measure, it can be said that the plastic deformation resistance is high when a dent depth is not more than 0.1 µm. After studying relation between the tempering temperature and the dent depth in detail, it was found that, if tempering is performed at not less than 280°C and not more than 320°C, when a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.1 µm.

According to the another rolling bearing in one embodiment of the present invention, the raceway surface of the at least one bearing member of outer ring 11, inner ring 12 as raceway members and balls 13 as rolling elements has a Rockwell C scale hardness of not less than HRC 60.5 and not more than HRC 62.1. It was found that the raceway surface of the bearing member has a Rockwell C scale hardness of not less than HRC 60.5 and not more than HRC 62.1 when the tempering temperature is within a range of not less than 280°C and not more than 320°C.

Therefore, by tempering the bearing member having nitrided raceway surface 11A, 12A, 13A at a tempering temperature of not less than 280°C and not more than 320°C, the plastic deformation resistance and resistance to production of atomic vacancy can be increased. Thus, the hydrogen embrittlement resistance can be improved to suppress premature flaking caused by hydrogen embrittlement.

According to the another rolling bearing in one embodiment of the present invention, raceway surface 11A, 12A, 13A has a surface-nitrided concentration of not less than 0.05% by mass and not more than 0.4% by mass.

If raceway surface 11A, 12A, 13A has a surface-nitrided concentration of less than 0.05% by mass, a sufficient effect of extended life by the nitriding cannot be obtained. If raceway surface 11A, 12A, 13A has a surface-nitrided concentration of more than 0.4% by mass, a large amount of Cr carbonitrides is produced, resulting in lack of the amount of Cr contributing to hardenability. Thus, sufficient hardenability cannot be ensured. By setting the surface-nitrided concentration of raceway surface 11A, 12A, 13A to not less than 0.05% by mass and not more than 0.4% by mass, a sufficient effect of extended life by the nitriding can be obtained, to ensure sufficient hardenability.

According to another rolling bearing in one embodiment of the present invention, balls 13 as rolling elements may be nitrided JIS standard SUJ2. In this case, balls 13 have been quenched. Each ball 13 has nitrided raceway surface 13A. Nitriding raceway surfaces 13A increases the plastic deformation resistance of balls 13. Nitriding raceway surfaces 13A of balls 13 increases the plastic deformation resistance of balls 13, thereby improving the hydrogen embrittlement resistance.

When a standard rolling bearing steel ball made of SUJ2 and having a diameter of 19.05 mm is pressed against balls 13 at a load of 3.18 kN and held for 10 seconds before the load is removed, a dent is formed in the bearing members at a depth of not more than 0.2 µm. As one measure, it can be said that the plastic deformation resistance is high when a dent depth is not more than 0.2 µm. After studying relation between the tempering temperature and the dent depth in detail, it was found that, if tempering is performed at not less than 240°C and not more than 300°C, when a standard rolling bearing steel ball made of SUJ2 and having a diameter of 19.05 mm is pressed against the bearing member at a load of 3.18 kN and held for 10 seconds before the load is removed, a dent is formed in the bearing member at a depth of not more than 0.2 µm.

Raceway surfaces 13A of balls 13 have a Rockwell C scale hardness of not less than HRC 61.2 and not more than HRC 63.3. It was found that the raceway surfaces of balls 13 have a Rockwell C scale hardness of not less than HRC 61.2 and not more than HRC 63.3 when the tempering temperature is within a range of not less than 240°C and not more than 300°C.

Therefore, by tempering balls 13 having nitrided raceway surfaces 13A at a tempering temperature of not less than 240°C and not more than 300°C, the plastic deformation resistance and resistance to production of atomic vacancy can be increased. Thus, the hydrogen embrittlement resistance can be improved to suppress premature flaking caused by hydrogen embrittlement.

According to the another rolling bearing in one embodiment of the present invention, raceway surfaces 13A of balls 13 have a surface-nitrided concentration of not less than 0.05% by mass and not more than 0.4% by mass.

If raceway surfaces 13A of balls 13 have a surface-nitrided concentration of less than 0.05% by mass, a sufficient effect of extended life by the nitriding cannot be obtained. If raceway surfaces 13A of balls 13 have a surface-nitrided concentration of more than 0.4% by mass, a large amount of Cr carbonitrides is produced, resulting in lack of the amount of Cr contributing to hardenability. Thus, sufficient hardenability cannot be ensured. By setting the surface-nitrided concentration of raceway surfaces 13A of balls 13 to not less than 0.05% by mass and not more than 0.4% by mass, a sufficient effect of extended life by the nitriding can be obtained, to ensure sufficient hardenability.

According to the another rolling bearing in one embodiment of the present invention, balls 13 as rolling elements may be non-nitrided JIS standard SUJ2 In this case, when a standard rolling bearing steel ball made of SUJ2 and having a diameter of 19.05 mm is pressed against balls 13 at a load of 1.97 kN and held for 10 seconds before the load is removed, a dent is formed in the bearing members at a depth of not more than 0.2 µm. As one measure, it can be said that the plastic deformation resistance is high when a dent depth is not more than 0.2 µm. After studying relation between the tempering temperature and the dent depth in detail, it was found that, if tempering is performed at not less than 240°C and not more than 280°C, when a standard rolling bearing steel ball made of SUJ2 and having a diameter of 19.05 mm is pressed against the bearing members at a load of 1.97 kN and held for 10 seconds before the load is removed, a dent is formed in the bearing members at a depth of not more than 0.2 µm.

Therefore, by tempering balls 13 not having nitrided raceway surfaces 13A at a tempering temperature of not less than 240°C and not more than 280°C, the plastic deformation resistance and resistance to production of atomic vacancy can be increased. Thus, the hydrogen embrittlement resistance can be improved to suppress premature flaking caused by hydrogen embrittlement.

According to the another rolling bearing in one embodiment of the present invention, the entire rolling elements have a Rockwell C scale hardness of not less than HRC 57.0 and not more than HRC 58.9. The entire rolling elements have a Rockwell C scale hardness of not less than HRC 57.0 and not more than HRC 58.9 when the tempering temperature is within a range of not less than 240°C and not more than 280°C.

According to the another rolling bearing in one embodiment of the present invention, the rolling elements may be made of a material containing ceramic. Thus, the rolling elements contain ceramic that does not exhibit hydrogen embrittlement. Thus, the hydrogen embrittlement resistance can be improved to suppress premature flaking caused by hydrogen embrittlement.

The another rolling bearing in one embodiment of the present invention may further include a cage for holding the rolling elements, the cage being made of a material containing metal. Under a condition in which an electric current is passed, premature flaking caused by hydrogen embrittlement is less likely to occur with a metal cage than with a resin cage. Therefore, premature flaking caused by hydrogen embrittlement can be suppressed.

The method of manufacturing the another rolling bearing in one embodiment of the present invention including outer ring 11, inner ring 12 as raceway members having an annular raceway, and balls 13 as a plurality of rolling elements being in contact with outer ring 11, inner ring 12 as raceway members and arranged on the annular raceway in a rollable manner, includes the following steps. At least one bearing member of outer ring 11, inner ring 12 as raceway members and balls 13 as rolling elements which is made of a material of JIS standard SUJ3 is prepared. Raceway surface 11A, 12A, 13A of the bearing member is nitrided and quenched. The quenched bearing member is tempered at not less than 280°C and not more than 320°C.

Nitriding and quenching raceway surface 11A, 12A, 13A of the bearing member increases the plastic deformation resistance of outer ring 11, inner ring 12 and balls 13 as the rolling member. Nitriding raceway surface 11A, 12A, 13A of the bearing member increases the plastic deformation resistance of the bearing member, thereby improving the hydrogen embrittlement resistance of the bearing member.

By tempering the quenched bearing member at not less than 280°C and not more than 320°C, the plastic deformation resistance of the bearing member and resistance to production of atomic vacancy in the bearing member can be increased. Thus, the hydrogen embrittlement resistance can be improved to suppress premature flaking caused by hydrogen embrittlement.

According to the method of manufacturing the another rolling bearing in one embodiment of the present invention, the nitriding is performed at a temperature of 850°C in an atmosphere of RX gas with ammonia gas introduced therein. As such, nitriding raceway surface 11A, 12A, 13A of the bearing member to a sufficient degree increases the plastic deformation resistance of the bearing member, thereby improving the hydrogen embrittlement resistance of the bearing member.

The one and another rolling bearings in one embodiment of the present invention may further include main shaft 92 of motor 90, and housing 93 arranged to be opposed to the outer peripheral surface of main shaft 92, as shown in Fig. 1, with shaft 92 being supported to be rotatable relative to housing 93. Thus, premature flaking caused by hydrogen embrittlement can be suppressed, to provide a long-life motor rolling bearing under severe operating conditions such as a condition in which water penetrates the bearing, a condition in which a slip occurs, or a condition in which an electric current is passed.

The one and another rolling bearings in one embodiment of the present invention may further include main shaft 101 of machine tool 100, and housing 102 arranged to be opposed to the outer peripheral surface of main shaft 101, as shown in Fig. 6, with shaft 101 being supported to be rotatable relative to housing 102. Thus, premature flaking caused by hydrogen embrittlement can be suppressed, to provide a long-life machine tool main shaft rolling bearing under severe operating conditions such as a condition in which water penetrates the bearing, a condition in which a slip occurs, or a condition in which an electric current is passed. Furthermore, a long-life machine tool main shaft rolling bearing can also be provided under an operating condition in which an oil film of lubricant has a reduced thickness in order to reduce friction torque of the bearing that causes heat generation during high-speed rotation.

While the one and another rolling bearings in one embodiment of the present invention are effective for common grease lubrication and air oil lubrication, they are particularly effective when an oil film between the raceway members and the rolling elements has a small thickness since they can be lubricated with a small amount of lubricant.

Lubrication device 40, in which the aforementioned amount of oil is reduced and low viscosity lubricant is further used, is operated at higher speed than in air oil lubrication generally used for a machine tool main shaft rolling bearing rotating at high speed. Accordingly, starvation readily occurs in lubrication device 40. Therefore, an oil film has a smaller thickness than that for air oil lubrication. Accordingly, hydrogen penetration readily occurs, thus raising the possibility of premature flaking caused by hydrogen embrittlement in lubrication device 40. By applying the rolling bearing in one embodiment of the present invention, the premature flaking caused by hydrogen embrittlement can be suppressed.

In lubrication device 60 utilizing the aforementioned capillary phenomenon, starvation readily occurs when operated at a speed equal to or higher than that for normal grease lubrication. Accordingly, hydrogen penetration readily occurs, thus raising the possibility of premature flaking caused by hydrogen embrittlement in lubrication device 60 as well. By applying the rolling bearing in one embodiment of the present invention, the premature flaking caused by hydrogen embrittlement can be suppressed.

The one and another rolling bearings in one embodiment of the present invention may further include the rotating-side member of wheel 120 and the fixed-side member arranged to be opposed to the outer peripheral surface of the rotating-side member, as shown in Fig. 11, with the rotating-side member being supported to be rotatable relative to the fixed-side member. Thus, premature flaking caused by hydrogen embrittlement can be suppressed, to provide a long-life wheel rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which the bearing vibrates, to provide a long-life wheel rolling bearing.

The one and another rolling bearings in one embodiment of the present invention may further include main shaft 201 of alternator 200, and housing 205 arranged to be opposed to the outer peripheral surface of main shaft 201, as shown in Fig. 13, with main shaft 201 being supported to be rotatable relative to housing 205. Thus, premature flaking caused by hydrogen embrittlement can be suppressed, to provide a long-life alternator rolling bearing under severe operating conditions such as a condition in which water penetrates the bearing, a condition in which a slip occurs, or a condition in which an electric current is passed. Premature flaking caused by hydrogen embrittlement can be suppressed particularly under an operating condition in which premature flaking caused by hydrogen embrittlement readily occurs due to a slip between contact elements from rapid acceleration and deceleration, to provide a long-life alternator rolling bearing. Furthermore, premature flaking caused by hydrogen embrittlement can also be suppressed under a condition in which a slip is induced more readily than before due to an increase in applied load and an increase in load variation as a result of serpentinization, to provide a long-life alternator rolling bearing.

The one and another rolling bearings in one embodiment of the present invention may further include main shaft 218 and pulley body 211 arranged to be opposed to the outer peripheral surface of main shaft 218, as shown in Fig. 14, with main shaft 218 being supported to be rotatable relative to pulley body 211. Thus, premature flaking caused by hydrogen embrittlement can be suppressed, to provide a long-life pulley rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a slip is induced more readily than before due to an increase in applied load and an increase in load variation as a result of serpentinization, to provide a long-life pulley rolling bearing.

The one and another rolling bearings in one embodiment of the present invention may further include car air conditioner electromagnetic clutch pulley 237 and pulley bearing support member 234 arranged to be opposed to the inner peripheral surface of car air conditioner electromagnetic clutch pulley 237, with car air conditioner electromagnetic clutch pulley 237 being supported to be rotatable relative to pulley bearing support member 234. Thus, premature flaking caused by hydrogen embrittlement can be suppressed, to provide a long-life car air conditioner electromagnetic clutch pulley rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a slip is induced more readily than before due to an increase in applied load and an increase in load variation as a result of serpentinization, to provide a long-life car air conditioner electromagnetic clutch pulley rolling bearing.

The one and another rolling bearings in one embodiment of the present invention may further include pulley shaft 241 of continuously variable transmission 240, and housing 246 arranged to be opposed to the outer peripheral surface of pulley shaft 241, as shown in Fig. 16, with pulley shaft 241 being supported to be rotatable relative to housing 246. Thus, premature flaking caused by hydrogen embrittlement can be suppressed, to provide a long-life continuously variable transmission rolling bearing under severe operating conditions such as a condition in which water penetrates the bearing, a condition in which a slip occurs, or a condition in which an electric current is passed. Furthermore, premature flaking caused by hydrogen embrittlement can also be suppressed under a condition in which a differential slip increases during bearing operation by setting a small curvature of groove of inner and outer rings of the bearing in order to reduce an axial clearance of the bearing, to provide a long-life continuously variable transmission rolling bearing.

The one and another rolling bearings in one embodiment of the present invention may be shell type needle roller bearing 250, as shown in Fig. 17. When the shell type needle roller bearing is used under a condition in which a slip occurs such as rapid acceleration and deceleration, particularly when used to support an air compressor of a vehicle rapidly accelerated and decelerated by switching of an electromagnetic clutch, when used to support an ABS pump rapidly accelerated during startup, or when used at a big end of a con rod of a versatile engine, a slip occurs readily in rolling elements, which may cause premature flaking caused by hydrogen embrittlement. According to the rolling bearing in one embodiment of the present invention, premature flaking caused by hydrogen embrittlement can be suppressed under such conditions, to provide long-life shell type needle roller bearing 250.

The one and another rolling bearings in one embodiment of the present invention may be solid type needle roller bearing 260, as shown in Fig. 18. When the solid type needle roller bearing is used under a condition in which a slip occurs such as rapid acceleration and deceleration, particularly when used to support an air compressor of a vehicle rapidly accelerated and decelerated by switching of an electromagnetic clutch, when used to support a transmission rapidly accelerated during startup, or when used at a big end of a con rod of a versatile engine, a slip occurs readily between contact elements, which may cause premature flaking caused by hydrogen embrittlement. According to the rolling bearing in one embodiment of the present invention, premature flaking caused by hydrogen embrittlement can be suppressed under such conditions, to provide long-life solid type needle roller bearing 260.

The one and another rolling bearings in one embodiment of the present invention may be needle roller thrust bearing 270, as shown in Fig. 19. In the needle roller thrust bearing, a slip occurs constantly between rolling elements and rolling rings during operation due to the difference in peripheral speed between the inner and outer sides of the rolling elements, which may cause premature flaking caused by hydrogen embrittlement. In the needle roller thrust bearing, premature flaking caused by hydrogen embrittlement may also occur under a condition in which a slip occurs such as rapid acceleration and deceleration. According to the rolling bearing in one embodiment of the present invention, premature flaking caused by hydrogen embrittlement can be suppressed under such conditions, to provide long-life needle roller thrust bearing 270.

The one and another rolling bearings in one embodiment of the present invention may include cage 253, as shown in Figs. 20 and 21. When the needle roller bearing with a cage is used under a condition in which a slip occurs such as rapid acceleration and deceleration, particularly when used as an idler bearing of a transmission of a vehicle rapidly accelerated during startup, when used as a planetary pinion support bearing of a CVT, or when used as a big end bearing of a con rod of a two-wheel engine or a versatile engine, a slip occurs readily in rolling elements, which may cause premature flaking caused by hydrogen embrittlement. According to the rolling bearing in one embodiment of the present invention, premature flaking caused by hydrogen embrittlement can be suppressed under such conditions, to provide long-life needle roller bearing 280 with a cage.

### EXAMPLES

Examples of the present invention will be described.

### (Example 1)

The following tests were conducted for evaluating the mechanical characteristics of raceway members and rolling elements of a rolling bearing of the present invention, in which the bearing members were made of JIS standard SUJ2 A test procedure, test conditions and test results of each test are described below. SUJ2 of the present invention should contain the chemical components of JIS standard SUJ2. In this example, SUJ2 containing chemical components shown in Table 1 was used by way of example for test pieces. SUJ2 of this example contained C (carbon), Si (silicon), Mn (manganese), P (phosphorus), S (sulfur), Cr (chromium), Mo (molybdenum), Ni (nickel), Cu (copper), A1 (aluminum), Ti (titanium) and O (oxygen) as chemical components.

**[Table 1]**

| (Unit: % by mass) | | | | | |
|---|---|---|---|---|---|
| C | Si | Mn | P | S | Cr |
| 1.00 | 0.17 | 0.38 | 0.014 | 0.005 | 1.37 |
| Mo | Ni | Cu | A1 | Ti | O |
| 0.03 | 0.07 | 0.12 | 0.012 | 0.0018 | 0.0004 |

### (1) Dent Forming Test

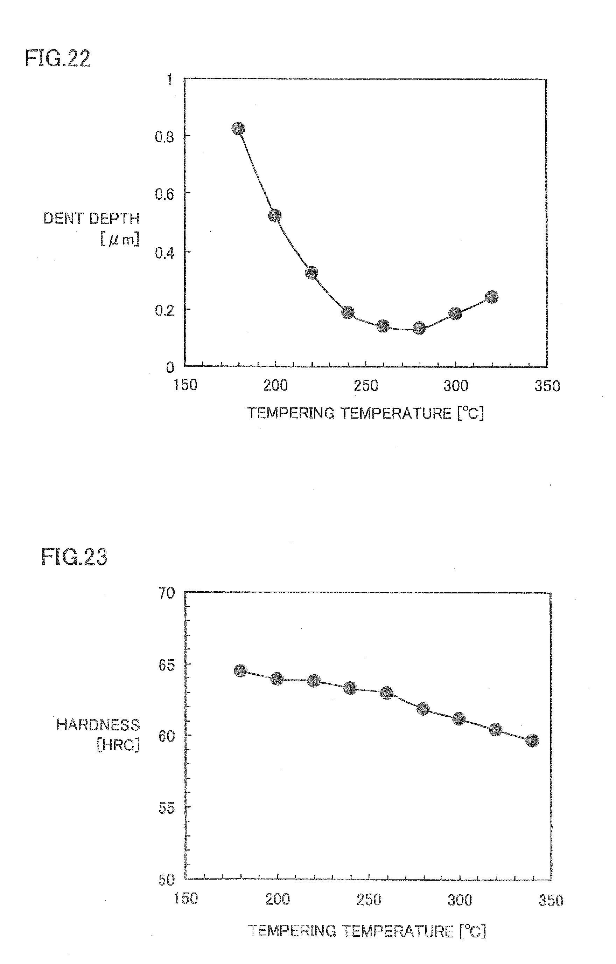

A plurality of circular plate-shaped test pieces were prepared, each having a diameter of 12 mm, a width of 2 mm, and a width surface having a particle size of 1 µm, and mirror-finished with a diamond paste. Heat treatment was performed by heating, nitriding and quenching the plurality of test pieces for 180 minutes at 850°C in an atmosphere of RX gas with ammonia gas introduced therein. Then, the test pieces were tempered for 120 minutes at a plurality of tempering temperatures between 180°C and 320°C, respectively. Then, a standard rolling bearing steel ball made of SUJ2 and having a diameter of 19.05 mm was pressed against a flat surface portion of the width surface of each test piece at a load of 3.18 kN with a maximum contact pressure of 4.4 GPa in calculation of Hertz elastic contact, and held for 10 seconds before the load was removed. The depth of a resultant dent formed in the test piece was measured. In the calculation of Hertz elastic contact, a Young's modulus of 204 GPa and a Poisson's ratio of 0.3 were used for the SUJ2, which were not dependent on the tempering temperature in actual measured values. A Young's modulus of 204 GPa and a Poisson's ratio of 0.3 were also used for the standard rolling bearing steel ball made of SUJ2. The test results are shown in Table 2 and Fig. 22, which illustrate relation between the tempering temperature and the dent depth.

**[Table 2]**

| Tempering temperature [°C] | Dent depth [µm] |
|---|---|
| 180 | 0.826 |
| 200 | 0.524 |
| 220 | 0.328 |
| 240 | 0.19 |
| 260 | 0.141 |
| 280 | 0.134 |
| 300 | 0.186 |
| 320 | 0.244 |

Referring to Fig. 22, the dent had the smallest depth around 260°C during the tempering. In other words, it can be said that under a practical maximum contact pressure or below acting on contact elements of the raceway members and the rolling elements of the rolling bearing, the plastic deformation resistance is the highest around a tempering temperature of 260°C. As one measure, it can be said that the plastic deformation resistance is high when the tempering temperature is within a range of not less than 240°C and not more than 300°C where the dent depth is not more than 0.2 µm. Atomic vacancy is produced by plastic deformation, that is, by interaction of dislocations. Accordingly, the higher the plastic deformation resistance, the higher the hydrogen embrittlement resistance. It was therefore found that the hydrogen embrittlement resistance is high within the range of not less than 240°C and not more than 300°C.

### (2) HRC (Rockwell C scale) Hardness Test

It is known that hardness decreases as a tempering temperature increases. This is because extremely large plastic deformation is provided in hardness measurement. For example, in HRC (Rockwell C scale) hardness measurement (a conical diamond indenter having a tip radius of 0.2 mm, an indentation load of 150 kgf) of steel, the maximum contact pressure is as high as 63.8 GPa in calculation of Hertz elastic contact. In the calculation of Hertz elastic contact, a Young's modulus of 204 GPa and a Poisson's ratio of 0.3 were used for the steel, and a Young's modulus of 1141 GPa and a Poisson's ratio of 0.07 were used for the indenter.

The HRC hardness of test pieces having the same dimensions and having been subjected to heat treatment under the same conditions as in the aforementioned (1) dent forming test was measured. The test results are shown in Table 3 and Fig. 23, which illustrate relation between the tempering temperature and the HRC hardness.

**[Table 3]**

| Tempering temperature [°C] | Hardness [HRC] |
|---|---|
| 180 | 64.5 |
| 200 | 63.9 |
| 220 | 63.8 |
| 240 | 63.3 |
| 260 | 62.9 |
| 280 | 61.8 |
| 300 | 61.2 |
| 320 | 60.4 |
| 340 | 59.7 |

Referring to Fig. 23, the HRC hardness was not less than HRC 61.2 and not more than HRC 63.3 when the tempering temperature was within a range of not less than 240°C and not more than 300°C.

### (3) Surface-Nitrided Concentration Measurement Test

The surface-nitrided concentration was measured by an Electron Probe Micro Analyzer (EPMA). Specifically, the measurement was taken under measurement conditions shown in Table 4. Namely, the measurement was taken using EPMA-1600 manufactured by Shimadzu Corporation as a model of measurement instrument, with an acceleration voltage of 15 kV, a spot diameter of 2 µm, a measurement interval of 2 µm, and a measurement time of 1 sec (second).

**[Table 4]**

| Model | EPMA-1600 by Shimadzu Corporation |
|---|---|
| Acceleration voltage | 15 kV |
| Spot diameter | 2 µm |
| Measurement interval | 2 µm |
| Measurement time | 1 sec |

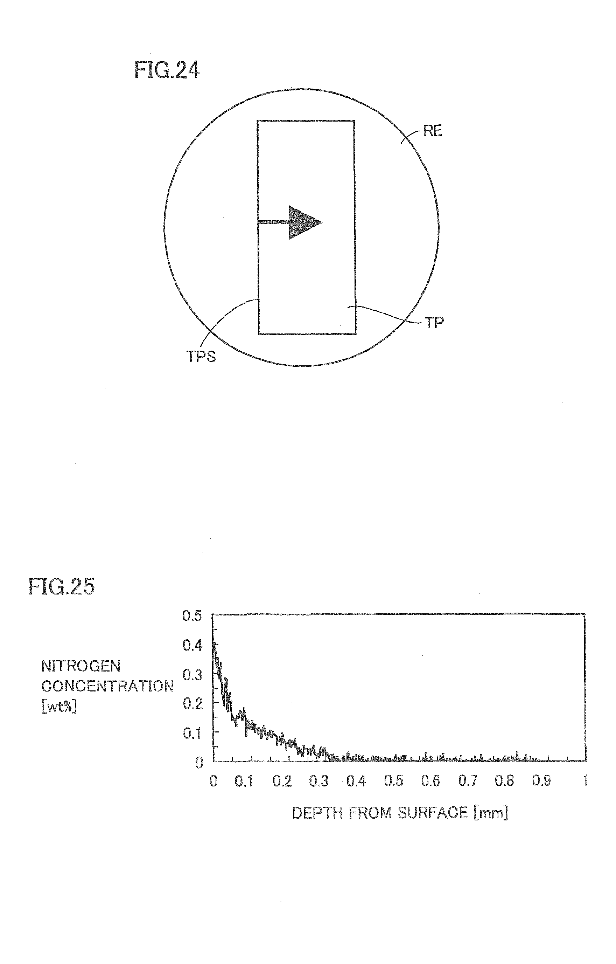

As the measurement method, a test piece having the same dimensions and having been subjected to heat treatment under the same conditions as in the aforementioned (1) dent forming test was cut to expose its surface and the cross section of its inside. A cut test piece TP was embedded in resin RE as shown in Fig. 24, and mirror-polished. The polished surface was subsequently degreased. Then, nitrogen concentration distribution in steel was determined by the EPMA in the direction of an arrow in Fig. 24 (direction inward from a surface side TPS of the test piece). Thus, the nitrogen concentration distribution in a depth direction from the surface was determined in the test piece corresponding to a raceway surface. The test results are shown in Table 5 and Fig. 25, which illustrate relation between the nitrogen concentration and the depth from the surface. For convenience sake, Table 5 and Fig. 25 only show part of the measured values.

**[Table 5]**

| Depth from surface (mm) | Nitrogen concentration (% by mass) | Depth from surface (mm) | Nitrogen concentration (% by mass) | Depth from surface (mm) | Nitrogen concentration (% by mass) |
|---|---|---|---|---|---|
| 0.00 | 0.3561 | 0.19 | 0.0687 | 0.40 | 0.0158 |
| 0.006 | 0.3991 | 0.20 | 0.0527 | 0.41 | -0.0032 |
| 0.01 | 0.3225 | 0.21 | 0.0713 | 0.42 | -0.0122 |
| 0.02 | 0.3209 | 0.22 | 0.0617 | 0.43 | 0.0013 |
| 0.03 | 0.2318 | 0.23 | 0.0305 | 0.44 | 0.0145 |
| 0.04 | 0.1699 | 0.24 | 0.0536 | 0.45 | -0.0019 |
| 0.048 | 0.2045 | 0.25 | 0.0337 | 0.46 | -0.0109 |
| 0.05 | 0.1403 | 0.26 | 0.0341 | 0.47 | 0.0058 |
| 0.06 | 0.1201 | 0.27 | 0.0280 | 0.48 | 0.0019 |
| 0.07 | 0.1506 | 0.28 | 0.0119 | 0.49 | -0.0225 |
| 0.08 | 0.1397 | 0.29 | 0.0402 | 0.50 | 0.0013 |
| 0.09 | 0.1278 | 0.30 | 0.0174 | 0.55 | 0.0010 |
| 0.10 | 0.1195 | 0.31 | 0.0097 | 0.60 | 0.0003 |
| 0.11 | 0.1140 | 0.32 | 0.0016 | 0.65 | -0.0260 |
| 0.12 | 0.0941 | 0.33 | -0.0038 | 0.70 | 0.0016 |
| 0.13 | 0.0883 | 0.34 | 0.0109 | 0.75 | -0.0061 |
| 0.14 | 0.0886 | 0.35 | 0.0013 | 0.80 | -0.0045 |
| 0.15 | 0.0963 | 0.36 | 0.0292 | 0.85 | -0.0151 |
| 0.16 | 0.0992 | 0.37 | -0.0042 | 0.89 | -0.01025 |
| 0.17 | 0.0575 | 0.38 | 0.0241 | 0.892 | -0.0070 |
| 0.18 | 0.0581 | 0.39 | 0.0193 | | |

Referring to Table 5 and Fig. 25, the nitrogen concentration in the surface of this test piece was about 0.4% by mass. The surface as used herein refers to an area having a depth of 0 to 0.01 mm from the surface. The nitrogen concentration decreases as the depth from the surface increases. The nitrided concentration was about 0.2% by mass at a depth of 0.048 mm from the surface, significantly decreased to 0.0097% by mass at a depth of 0.31 mm of from the surface, and was substantially 0 at a depth of 0.41 mm or more from the surface.

### (4) Rolling Fatigue Test in Water-Contaminated Oil

Under a condition of rolling contact in which water penetration occurs, hydrogen is produced by the decomposition of water and enters steel to cause premature flaking. A rolling fatigue test in water-contaminated oil was conducted.

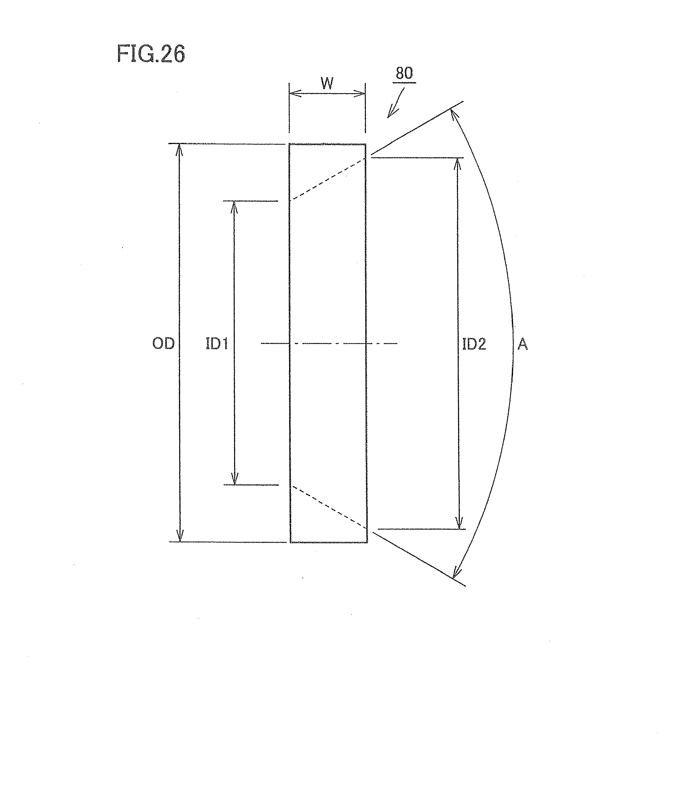

Referring to Fig. 26, a tapered outer ring test piece 80 was prepared. Tapered outer ring test piece 80 had the following dimensions. A width W of 14 mm (tolerance: +0, -0.01 mm), an outer diameter ODφ of 72 mm (tolerance: +0, -0.01 mm), an inner diameter ID1φ of 51.19 mm (tolerance: ±0.025 mm) on the narrow side of the tapered shape, an inner diameter ID2φ of 67.12 mm (tolerance: ±0.025 mm) on the wide side of the tapered shape, and an angle A of 59.3°(tolerance: ±0.5°) between the opposite sides of the tapered shape. Heat treatment was followed by grinding finishing. An inner diameter raceway surface was super-finished to have a surface roughness Rq (root-mean-square roughness) of 0.03 µm.

The heat treatment was performed by heating, nitriding and quenching for 180 minutes at 850°C in an atmosphere ofRX gas with ammonia gas introduced therein. Then, in the example, tempering was performed for 120 minutes at a tempering temperature of 260°C at which it was mot difficult to form a dent in the aforementioned (1) dent forming test. On the other hand, in a comparative example for the purpose of comparison with the example, quenching was performed for 120 minutes at a normal quenching temperature of 180°C.

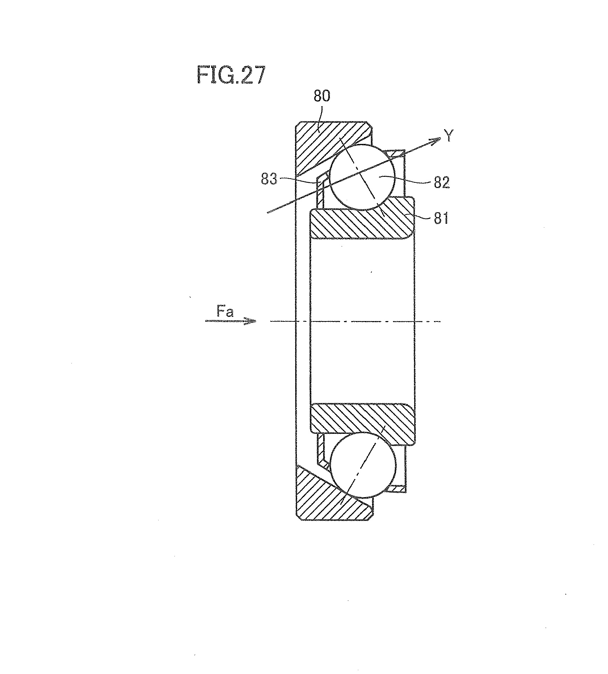

Referring to Fig. 27, the test was conducted with tapered outer ring test piece 80 combined with an inner ring 81, 13 steel balls 82, and a cage 83 of an angular contact ball bearing (JIS standard 7306B). Inner ring 81 and steel balls 82 of the angular contact ball bearing were SUJ2 standard quenched and tempered components. The water-contaminated oil was prepared by contaminating additive-free turbine oil of ISO VG100 (density: 0.887 g/cm³, kinematic viscosity at 40°C: 100.9 mm²/s, kinematic viscosity at 100°C: 11.68 mm²/s) with 7% by mass (tolerance: ±0.01% by mass) of pure water. The water-contaminated oil thus prepared was sealed with a food packaging thin film to prevent water evaporation, and stirred with a stirrer for at least two hours. Subsequently, the test was conducted with the water-contaminated oil. Sixty mL of the water-contaminated oil was injected. As shown in Fig. 27, the water-contaminated oil flows in the direction of an arrow Y in the figure due to the tapered shape. The water-contaminated oil was circulated by connecting, with a nylon tube, an inlet and an outlet of the water-contaminated oil provided in a not-shown housing.

Only an axial load Fa (2.94 kN) was applied to cause the inner ring to rotate at a rotational speed of 2733 revolutions per minute. At this time, a maximum contact pressure between the outer ring and the steel balls in calculation of Hertz elastic contact was 3 GPa. In the calculation of Hertz elastic contact, a Young's modulus of 204 GPa and a Poisson's ratio of 0.3 were used for tapered outer ring test piece 80 and steel balls 82 made of SUJ2 A parameter of an oil film between the outer ring and the steel balls was about 3 in calculation of elastohydrodynamic lubrication ignoring water contamination. The steel balls had a uniform surface roughness of 0.0178 µm in actual measured value Rq. A single piece of tapered outer ring test piece 80 had a calculated life L₁₀ₕ of 2611 hours when calculated as transformed into a two-cylinder model. The effect of a slip was ignored. Flaking was detected with a vibrometer. The test was conducted for 20 hours. If flaking did not occur during that period of time, the water-contaminated oil was replaced with newly prepared water-contaminated oil. The 20-hour test and the replacement of water-contaminated oil was repeated until flaking occurred.

The test was conducted for five pieces in each of the example and comparative example. All flaking occurred in tapered outer ring test piece 80, and originated within a surface layer. Flaking did not occur in steel balls 82 made of SUJ2 which were standard quenched and tempered components. This may be because steels balls 82 had an effective load volume greater than that of tapered outer ring test piece 80.

The test results are shown in Table 6, which illustrates L₁₀, L₅₀ obtained by applying the flaking lives to two-parameter Weibull distribution and Weibull slope (shape parameter) e in the example and comparative example.

**[Table 6]**

| | Example | Comparative example |
|---|---|---|
| L₁₀ (time) | 560.3 | 42.8 |
| L₅₀ (time) | 1310.6 | 90.4 |
| e | 2.22 | 2.52 |

L₁₀ in the comparative example was 42.8 hours, which was about a sixtieth of calculated life L₁₀ₕ of 2611 hours. In contrast, L₁₀ in the example was 560.3 hours, which fell short of calculated life L₁₀ₕ but was about 13 times longer than in the comparative example. It was therefore found that the effect of increasing the resistance to premature flaking caused by hydrogen embrittlement was provided in the example.

### (Example 2)

A test procedure, test conditions and test results of each test for evaluating the mechanical characteristics of non-nitrided rolling elements made of JIS standard SUJ2 of a rolling bearing of the present invention are described below. It is noted that the matters similar to those in the aforementioned Example 1 will not be repeated except for the following matters. SUJ2 constituting the rolling elements of the rolling bearing of the present invention should contain the chemical components of JIS standard SUJ2. In this example, SUJ2 containing the chemical components shown in Table 1 was used by way of example for test pieces.

### (1) Dent Forming Test

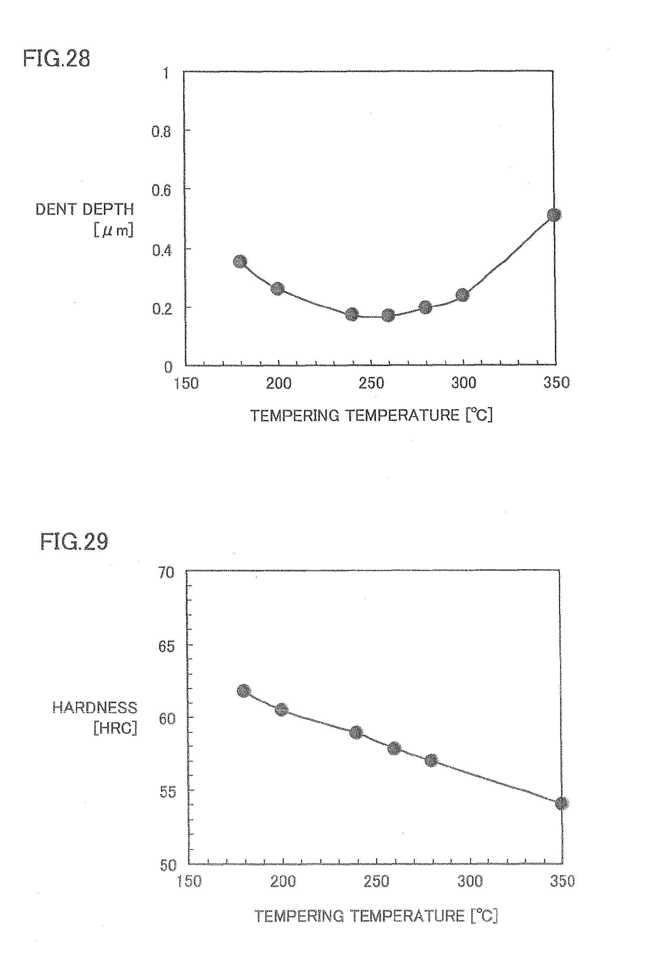

A plurality of circular plate-shaped test pieces were prepared, each having a diameter of 12 mm, a width of 2 mm, and a width surface having a particle size of 1 µm, and mirror-finished with a diamond paste. Heat treatment was performed by heating and through hardening the plurality of test pieces for 80 minutes at 850°C in an RX gas atmosphere. Then, the test pieces were tempered for 120 minutes at a plurality of tempering temperatures between 180°C and 350°C, respectively. Then, a standard rolling bearing steel ball made of SUJ2 and having a diameter of 19.05 mm was pressed against a flat surface portion of the width surface of each test piece at a load of 1.97 kN with a maximum contact pressure of 3.8 GPa in calculation of Hertz elastic contact, and held for 10 seconds before the load was removed. The depth of a resultant dent formed in the test piece was measured. In the calculation of Hertz elastic contact, a Young's modulus of 204 GPa and a Poisson's ratio of 0.3 were used for the SUJ2, which were not dependent on the tempering temperature in actual measured values. A Young's modulus of 204 GPa and a Poisson's ratio of 0.3 were also used for the standard rolling bearing steel ball made of SUJ2. The test results are shown in Table 7 and Fig. 28, which illustrate relation between the tempering temperature and the dent depth.

**[Table 7]**

| Tempering temperature [°C] | Dent depth [µm] |
|---|---|
| 180 | 0.355 |
| 200 | 0.262 |
| 240 | 0.173 |
| 260 | 0.17 |
| 280 | 0.196 |
| 300 | 0.238 |
| 350 | 0.507 |

Referring to Fig. 28, the dent had the smallest depth around 260°C during the tempering. In other words, it can be said that under a practical maximum contact pressure or below acting on contact elements of the raceway members and the rolling elements of the rolling bearing, the plastic deformation resistance is the highest around a tempering temperature of 260°C. As one measure, it can be said that the plastic deformation resistance is high when the tempering temperature is within a range of not less than 240°C and not more than 280°C where the dent depth is not more than 0.2 µm. Atomic vacancy is produced by plastic deformation, that is, by interaction of dislocations. Accordingly, the higher the plastic deformation resistance, the higher the hydrogen embrittlement resistance. It was therefore found that the hydrogen embrittlement resistance is high within the range of not less than 240°C and not more than 280°C.

### (2) HRC (Rockwell C scale) Hardness Test

The HRC hardness of test pieces having the same dimensions and having been subjected to heat treatment under the same conditions as in the aforementioned (1) dent forming test was measured. The test results are shown in Table 8 and Fig. 29, which illustrate relation between the tempering temperature and the HRC hardness.

**[Table 8]**

| Tempering temperature [°C] | Hardness [HRC] |
|---|---|
| 180 | 61.8 |
| 200 | 60.5 |
| 240 | 58.9 |
| 260 | 57.8 |
| 280 | 57.0 |
| 350 | 54.0 |

Referring to Fig. 29, the HRC hardness was not less than HRC 57.0 and not more than HRC 58.9 when the tempering temperature was within a range of not less than 240°C and not more than 280°C.

### (3) Rolling Fatigue Test in Water-Contaminated Oil

Tapered outer ring test piece 80 shown in Fig. 26 was prepared. Heat treatment different from that in Example 1 was performed. The heat treatment was performed by heating and through hardening for 80 minutes at 850°C in an RX gas atmosphere. Then, in the example, tempering was performed for 120 minutes at a tempering temperature of 260°C at which it was mot difficult to form a dent in the aforementioned (1) dent forming test. On the other hand, in a comparative example for the purpose of comparison with the example, quenching was performed for 120 minutes at a normal quenching temperature of 180°C.

As in Example 1, referring to Fig. 27, the test was conducted with tapered outer ring test piece 80 combined with an inner ring 81, 13 steel balls 82, and a cage 83 of an angular contact ball bearing (JIS standard 7306B). A test similar to that in Example 1 was conducted with these components. In this example, water-contaminated oil was prepared by contaminating oil with 5% by mass (tolerance: ±0.01% by mass) of pure water. The conditions for the test were otherwise similar to those of Example 1.

The test results are shown in Table 9, which illustrates L₁₀, L₅₀ obtained by applying the flaking lives to two-parameter Weibull distribution and Weibull slope (shape parameter) e in the example and comparative example.

**[Table 9]**

| | Example | Comparative example |
|---|---|---|
| L₁₀ (time) | 517.3 | 33.7 |
| L₅₀ (time) | 1268.2 | 84.1 |
| e | 2.10 | 2.06 |

L₁₀ in the comparative example was 33.7 hours, which was about a hundredth of calculated life L₁₀ₕ of 2611 hours. In contrast, L₁₀ in the example was 517.3 hours, which fell short of calculated life L₁₀ₕ but was about 15 times longer than in the comparative example. It was therefore found that the effect of increasing the resistance to premature flaking caused by hydrogen embrittlement was provided in the example.

It was confirmed that test results similar to those in Example 1 and Example 2 were obtained with SUJ2 containing the chemical components as defined by JIS standard SUJ2.

### (Example 3)

The following tests were conducted for evaluating the mechanical characteristics of raceway members and rolling elements of a rolling bearing of the present invention, in which the bearing members were made of JIS standard SUJ3. A test procedure, test conditions and test results of each test are described below. SUJ3 of the present invention should contain the chemical components of JIS standard SUJ3. In this example, SUJ3 containing chemical components shown in Table 10 was used by way of example for test pieces. SUJ3 of this example contained C (carbon), Si (silicon), Mn (manganese), P (phosphorus), S (sulfur), Cr (chromium), Mo (molybdenum), Ni (nickel), Cu (copper), A1 (aluminum), Ti (titanium) and O (oxygen) as chemical components.

**[Table 10]**

| (Unit: % by mass) | | | | | |
|---|---|---|---|---|---|
| C | Si | Mn | P | S | Cr |
| 0.98 | 0.53 | 1.05 | 0.014 | 0.007 | 1.05 |
| Mo | Ni | Cu | A1 | Ti | O |
| 0.04 | 0.09 | 0.12 | 0.009 | 0.0017 | 0.0005 |

### (1) Dent Forming Test

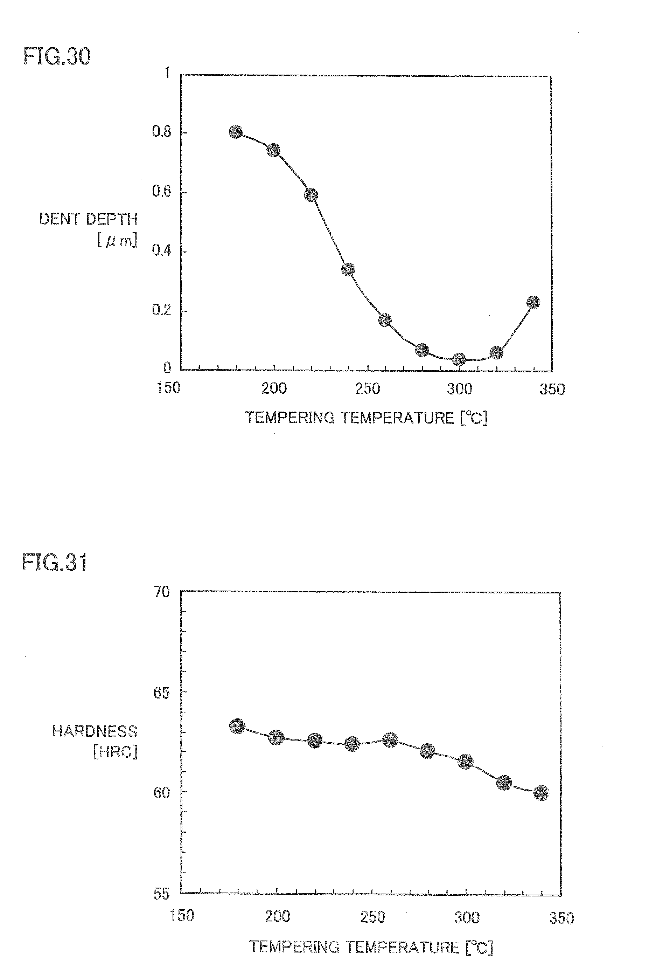

A plurality of circular plate-shaped test pieces were prepared, each having a diameter of 12 mm, a width of 2 mm, and a width surface having a particle size of 1 µm, and mirror-finished with a diamond paste. Heat treatment was performed by nitriding and quenching the plurality of test pieces for 180 minutes at 850°C in an atmosphere of RX gas with ammonia gas introduced therein. Then, the test pieces were tempered for 120 minutes at a plurality of tempering temperatures between 180°C and 340°C, respectively. Then, a standard rolling bearing steel ball made of SUJ2 and having a diameter of 19.05 mm was pressed against a flat surface portion of the width surface of each test piece at a load of 3.18 kN with a maximum contact pressure of 4.4 GPa in calculation of Hertz elastic contact, and held for 10 seconds before the load was removed. The depth of a resultant dent formed in the test piece was measured. In the calculation of Hertz elastic contact, a Young's modulus of 204 GPa and a Poisson's ratio of 0.3 were used for the SUJ3, which were not dependent on the tempering temperature in actual measured values. A Young's modulus of 204 GPa and a Poisson's ratio of 0.3 were also used for the standard rolling bearing steel ball made of SUJ2. The test results are shown in Table 11 and Fig. 30, which illustrate relation between the tempering temperature and the dent depth.

**[Table 11]**

| Tempering temperature [°C] | Dent depth [µm] |
|---|---|
| 180 | 0.806 |
| 200 | 0.742 |
| 220 | 0.591 |
| 240 | 0.343 |
| 260 | 0.17 |
| 280 | 0.069 |
| 300 | 0.036 |
| 320 | 0.06 |
| 340 | 0.233 |

Referring to Fig. 30, the dent had the smallest depth around 300°C during the tempering. In other words, it can be said that under a practical maximum contact pressure or below acting on contact elements of the raceway members and the rolling elements of the rolling bearing, the plastic deformation resistance is the highest around a tempering temperature of 300°C. As one measure, it can be said that the plastic deformation resistance is high when the tempering temperature is within a range of not less than 280°C and not more than 320°C where the dent depth is not more than 0.1 µm. Atomic vacancy is produced by plastic deformation, that is, by interaction of dislocations. Accordingly, the higher the plastic deformation resistance, the higher the hydrogen embrittlement resistance. It was therefore found that the hydrogen embrittlement resistance is high within the range of not less than 280°C and not more than 320°C.

### (2) HRC (Rockwell C scale) Hardness Test

The HRC hardness of test pieces having the same dimensions and having been subjected to heat treatment under the same conditions as in the aforementioned (1) dent forming test was measured. The test results are shown in Table 12 and Fig. 31, which illustrate relation between the tempering temperature and the HRC hardness.

**[Table 12]**

| Tempering temperature [°C] | Hardness [HRC] |
|---|---|
| 180 | 63.3 |
| 200 | 62.7 |
| 220 | 62.6 |
| 240 | 62.4 |
| 260 | 62.6 |
| 280 | 62.1 |
| 300 | 61.6 |
| 320 | 60.5 |
| 340 | 60.0 |

Referring to Fig. 31, the HRC hardness was not less than HRC 60.5 and not more than HRC 62.1 when the tempering temperature was within a range of not less than 280°C and not more than 320°C.

### (3) Surface-Nitrided Concentration Measurement Test

The surface-nitrided concentration was measured in a manner similar to Example 1.

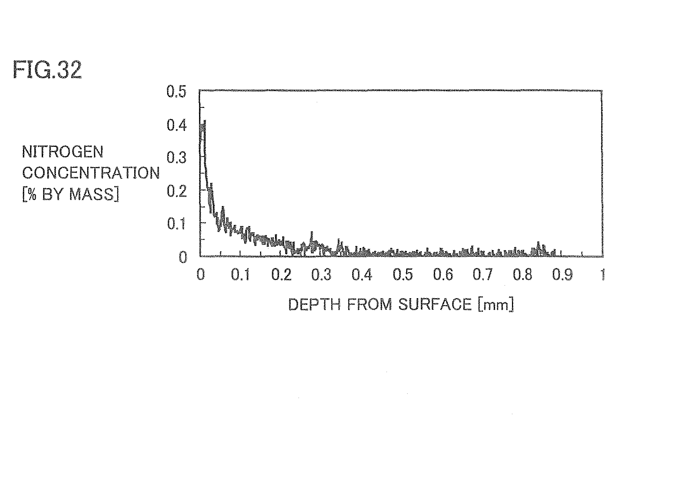

The test results are shown in Table 13 and Fig. 32, which illustrate relation between the nitrogen concentration and the depth from the surface. For convenience sake, Table 13 and Fig. 32 only show part of the measured values.

**[Table 13]**

| Depth from surface (mm) | Nitrogen concentration (% by mass) | Depth from surface (mm) | Nitrogen concentration (% by mass) | Depth from surface (mm) | Nitrogen concentration (% by mass) |
|---|---|---|---|---|---|
| 0.00 | 0.2643 | 0.19 | 0.0623 | 0.39 | 0.0244 |
| 0.002 | 0.3919 | 0.20 | 0.0337 | 0.40 | 0.0219 |
| 0.01 | 0.3850 | 0.21 | 0.0280 | 0.41 | -0.0090 |
| 0.02 | 0.1988 | 0.22 | 0.0440 | 0.42 | 0.0180 |
| 0.03 | 0.1789 | 0.23 | 0.0052 | 0.43 | 0.0093 |
| 0.04 | 0.1294 | 0.24 | 0.0164 | 0.44 | 0.0010 |
| 0.05 | 0.1076 | 0.25 | 0.0222 | 0.45 | 0.0010 |
| 0.06 | 0.0970 | 0.26 | 0.0324 | 0.46 | 0.0058 |
| 0.07 | 0.1021 | 0.27 | 0.0254 | 0.47 | 0.0170 |
| 0.08 | 0.0796 | 0.28 | 0.0177 | 0.48 | 0.0158 |
| 0.09 | 0.0719 | 0.29 | 0.0440 | 0.49 | 0.0180 |
| 0.10 | 0.0694 | 0.30 | 0.0324 | 0.50 | -0.0042 |
| 0.11 | 0.0665 | 0.312 | 0.0254 | 0.55 | -0.0093 |
| 0.12 | 0.0832 | 0.32 | 0.0186 | 0.60 | 0.0145 |
| 0.13 | 0.0662 | 0.33 | 0.0138 | 0.65 | 0.0141 |
| 0.14 | 0.0617 | 0.34 | 0.0106 | 0.70 | -0.0106 |
| 0.15 | 0.0472 | 0.35 | 0.0308 | 0.75 | 0.0093 |
| 0.16 | 0.0373 | 0.36 | -0.0141 | 0.80 | -0.0125 |
| 0.17 | 0.0421 | 0.37 | 0.0097 | 0.85 | 0.0100 |
| 0.18 | 0.0514 | 0.38 | 0.0036 | 0.89 | 0.0003 |

Referring to Table 13 and Fig. 32, the nitrogen concentration in the surface of this test piece was about 0.4% by mass. The surface as used herein refers to an area having a depth of 0 to 0.01 mm from the surface. The nitrogen concentration was about 0.1% by mass at a depth of about 0.05 mm from the surface, significantly decreased to 0.0097% by mass at a depth of 0.37 mm of from the surface, and was substantially 0 at a depth of 0.41 mm or more from the surface.

### (4) Rolling Fatigue Test in Water-Contaminated Oil

A rolling fatigue test in water-contaminated oil was conducted in a manner similar to Example 1. Heat treatment different from that in Example 1 was performed.

As in Example 1, tapered outer ring test piece 80 shown in Fig. 26 was prepared. The heat treatment was performed by nitriding and quenching for 180 minutes at 850°C in an atmosphere of RX gas with ammonia gas introduced therein. Then, in this example, tempering was performed for 120 minutes at a tempering temperature of 300°C at which it was mot difficult to form a dent in the aforementioned (1) dent forming test. On the other hand, in a comparative example for the purpose of comparison with this example, quenching was performed for 120 minutes at a normal quenching temperature of 180°C.

As in Example 1, referring to Fig. 27, the test was conducted with tapered outer ring test piece 80 combined with an inner ring 81, 13 steel balls 82, and a cage 83 of an angular contact ball bearing (JIS standard 7306B). The test was conducted with these components under conditions similar to those of Example 1.

The test results are shown in Table 14, which illustrates L₁₀, L₅₀ obtained by applying the flaking lives to two-parameter Weibull distribution and Weibull slope (shape parameter) e in the example and comparative example.

**[Table 14]**

| | Example | Comparative example |
|---|---|---|
| L₁₀ (h) | 725.1 | 43.7 |
| L₅₀ (h) | 1897.3 | 85.7 |
| e | 1.96 | 2.80 |

L₁₀ in the comparative example was 43.7 hours, which was about a sixtieth of calculated life L₁₀ₕ of 2611 hours. In contrast, L₁₀ in this example was 725.1 hours, which fell short of calculated life L₁₀ₕ but was about 16 times longer than in the comparative example. It was therefore found that the effect of increasing the resistance to premature flaking caused by hydrogen embrittlement was provided in the example.

It was confirmed that test results similar to those in this example were obtained with SUJ3 containing the chemical components as defined by JIS standard SUJ3.

The aforementioned embodiments of the present invention are combined together as appropriate.

It should be understood that the embodiments and examples disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

The present invention can be applied particularly advantageously to a rolling bearing and a method of manufacturing the rolling bearing.

### REFERENCE SIGNS LIST

1 grease-sealed deep groove ball bearing; 10, 30, 50 angular contact ball bearing; 11, 261 outer ring; 11A outer ring raceway surface; 11b stepped surface; 12 inner ring; 12A inner ring raceway surface; 12B slope portion; 13 ball; 13A ball raceway surface; 14, 253 cage; 15 sealing member; 16 grease composition; 20 cylindrical roller bearing; 23A roller raceway surface; 31 lubricant introducing member; 31a rib-shaped portion; 31b sealing portion; 31c lubricant supply path; 31d discharge outlet; 31e drain oil circumferential groove; 32 lid member; 33 inner ring spacer; 34 oil receiving circumferential groove; 40, 60 lubrication device; 61 spacer; 62 grease reservoir forming member; 62a tip portion; 63 grease reservoir; 64 flow path; 65 gap; 66 tapered surface; 80 tapered outer ring test piece; 81 inner ring; 82 steel ball; 83 cage; 90, 103 motor; 91 rotor; 92, 101, 223 main shaft; 92A outer peripheral surface; 93 frame; 94 commutator; 95 brush; 96 stator; 100 machine tool; 101 A outer peripheral surface; 101B tip; 102, 221 housing; 102A inner wall; 103A motor stator; 103B motor rotor; 110 double row angular contact ball bearing; 111 wheel; 112 tire; 113 hub wheel; 114 knuckle; 115 magnetic encoder; 116 magnetic sensor; 120 wheel; 200 alternator; 201, 218 shaft; 202 rotor; 203 stator; 204 pulley; 205 housing; 210 pulley; 211 pulley body; 220 compressor; 222 swash plate; 224 piston; 225 rotating member; 226 piston rod; 230 compressor pulley mechanism; 231 rotating member/pulley support member bearing; 232 main shaft support bearing; 233 swash plate support bearing; 234 pulley bearing support member; 235 clutch electromagnet; 236 power transmitting member; 237 car air conditioner electromagnetic clutch pulley; 240 belt type continuously variable transmission; 241 primary pulley shaft; 242 primary pulley; 242a primary pulley fixed sheave; 242b primary pulley movable sheave; 243 secondary pulley shaft; 244 secondary pulley; 244a secondary pulley fixed sheave; 244b secondary pulley movable sheave; 245 endless belt; 246 casing; 250 shell type needle roller bearing; 251 shell outer ring; 251a rib portion; 252 needle roller; 260 solid type needle roller bearing; 270 needle roller thrust bearing; 271 raceway washer; 271a raceway washer outer diameter portion; 271b raceway washer projecting portion; 280 needle roller bearing with cage.

## Claims

1. A rolling bearing comprising:
a raceway member (11, 12) having an annular raceway; and
a plurality of rolling elements (13) being in contact with said raceway member (11, 12) and arranged on said annular raceway in a rollable manner,
at least one bearing member of said raceway member (11, 12) and said rolling elements (13) being made of JIS standard SUJ2,
said bearing member having been quenched,
said bearing member having a nitrided raceway surface (11A, 12A, 13A),
when a standard rolling bearing steel ball made of SUJ2 and having a diameter of 19.05 mm is pressed against said bearing member at a load of 3.18 kN and held for 10 seconds before the load is removed, a dent being formed in said bearing member at a depth of not more than 0.2 µm,
said raceway surface (11A, 12A, 13A) having a Rockwell C scale hardness of not less than HRC 61.2 and not more than HRC 63.3.

2. The rolling bearing according to claim 1, wherein
said raceway surface (11A, 12A, 13A) has a surface-nitrided concentration of not less than 0.05% by mass and not more than 0.4% by mass.

3. The rolling bearing according to claim 1, wherein
said rolling elements (13) are made of non-nitrided JIS standard SUJ2, and
when a standard rolling bearing steel ball made of SUJ2 and having a diameter of 19.05 mm is pressed against said rolling elements (13) at a load of 1.97 kN and held for 10 seconds before the load is removed, a dent is formed in said rolling elements (13) at a depth of not more than 0.2 µm

4. The rolling bearing according to claim 3, wherein
the entire said rolling elements (13) have a Rockwell C scale hardness of not less than HRC 57.0 and not more than HRC 58.9.

5. The rolling bearing according to claim 1, wherein
said rolling elements (13) are made of a material containing ceramic.

6. The rolling bearing according to claim 1, further comprising a cage (14) for holding said rolling elements (13), said cage (14) being made of a material containing metal.

7. A method of manufacturing a rolling bearing including a raceway member (11, 12) having an annular raceway, and a plurality of rolling elements (13) being in contact with said raceway member (11, 12) and arranged on said annular raceway in a rollable manner, comprising the steps of:
preparing at least one bearing member of said raceway member (11, 12) and said rolling elements (13) which is made of a material of JIS standard SUJ2;
nitriding and quenching a raceway surface (11A, 12A, 13A) of said bearing member; and
tempering quenched said bearing member at not less than 240°C and not more than 300°C.

8. The method of manufacturing a rolling bearing according to claim 7, wherein
said nitriding is performed at a temperature of 850°C in an atmosphere of RX gas with ammonia gas introduced therein.

9. A rolling bearing comprising:
a raceway member (11, 12) having an annular raceway; and
a plurality of rolling elements (13) being in contact with said raceway member (11, 12) and arranged on said annular raceway in a rollable manner,
at least one bearing member of said raceway member (11, 12) and said rolling elements (13) being made of JIS standard SUJ3,
said bearing member having been quenched,
said bearing member having a nitrided raceway surface (11A, 12A, 13A),
when a standard rolling bearing steel ball made of SUJ2 and having a diameter of 19.05 mm is pressed against said bearing member at a load of 3.18 kN and held for 10 seconds before the load is removed, a dent being formed in said bearing member at a depth of not more than 0.1 µm,
said raceway surface (11A, 12A, 13A) having a Rockwell C scale hardness of not less than HRC 60.5 and not more than HRC 62.1.

10. The rolling bearing according to claim 9, wherein
said raceway surface (11A, 12A, 13A) has a surface-nitrided concentration of not less than 0.05% by mass and not more than 0.4% by mass.

11. The rolling bearing according to claim 9, wherein
said rolling elements (13) are made of JIS standard SUJ2,
said rolling elements (13) have been quenched,
said rolling elements (13) each have a nitrided raceway surface (13A),
when a standard rolling bearing steel ball made of SUJ2 and having a diameter of 19.05 mm is pressed against said rolling elements (13) at a load of 3.18 kN and held for 10 seconds before the load is removed, a dent is formed in said rolling elements (13) at a depth of not more than 0.2 µm, and
said raceway surface (13A) has a Rockwell C scale hardness of not less than HRC 61.2 and not more than HRC 63.3.

12. The rolling bearing according to claim 11, wherein
said raceway surface (13A) has a surface-nitrided concentration of not less than 0.05% by mass and not more than 0.4% by mass.

13. The rolling bearing according to claim 9, wherein
said rolling elements (13) are made of non-nitrided JIS standard SUJ2, and
when a standard rolling bearing steel ball made of SUJ2 and having a diameter of 19.05 mm is pressed against said rolling elements (13) at a load of 1.97 kN and held for 10 seconds before the load is removed, a dent is formed in said rolling elements (13) at a depth of not more than 0.2 µm.

14. The rolling bearing according to claim 13, wherein
the entire said rolling elements (13) have a Rockwell C scale hardness of not less than HRC 57.0 and not more than HRC 58.9.

15. The rolling bearing according to claim 9, wherein
said rolling elements (13) are made of a material containing ceramic.

16. The rolling bearing according to claim 9, further comprising a cage (14) for holding said rolling elements (13), said cage (14) being made of a material containing metal.

17. A method of manufacturing a rolling bearing including a raceway member (11, 12) having an annular raceway, and a plurality of rolling elements (13) being in contact with said raceway member (11, 12) and arranged on said annular raceway in a rollable manner, comprising the steps of:
preparing at least one bearing member of said raceway member (11, 12) and said rolling elements (13) which is made of a material of JIS standard SUJ3;
nitriding and quenching a raceway surface (11A, 12A, 13A) of said bearing member; and
tempering quenched said bearing member at not less than 280°C and not more than 320°C.

18. The method of manufacturing a rolling bearing according to claim 17, wherein
said nitriding is performed at a temperature of 850°C in an atmosphere of RX gas with ammonia gas introduced therein.
